(19) Europäisches Patentamt
European Patent Office
Office européen des brevets

(11) **EP 4 436 199 A1**

(12) **EUROPEAN PATENT APPLICATION**
published in accordance with Art. 153(4) EPC

(43) Date of publication:
**25.09.2024 Bulletin 2024/39**

(21) Application number: **22915813.4**

(22) Date of filing: **20.12.2022**

(51) International Patent Classification (IPC):
*H04N 23/955* (2023.01)    *G03B 15/00* (2021.01)
*G03B 19/16* (2021.01)    *G06T 7/00* (2017.01)
*H04N 23/55* (2023.01)    *H04N 23/60* (2023.01)

(52) Cooperative Patent Classification (CPC):
**G03B 15/00; G03B 19/16; G06T 7/00; H04N 23/55;**
**H04N 23/60; H04N 23/955**

(86) International application number:
**PCT/JP2022/046813**

(87) International publication number:
**WO 2023/127589 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.12.2021 JP 2021212421**

(71) Applicant: **Panasonic Intellectual Property**
**Corporation**
**of America**
**Torrance, CA 90504 (US)**

(72) Inventors:
• **SATO, Satoshi**
**Kadoma-shi, Osaka 571-0057 (JP)**
• **NOBORI, Kunio**
**Kadoma-shi, Osaka 571-0057 (JP)**
• **YASUGI, Shunsuke**
**Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **IMAGE IDENTIFICATION SYSTEM, IMAGE IDENTIFICATION METHOD, IMAGE IDENTIFICATION PROGRAM, AND COMPUTER-READABLE NON-TEMPORARY RECORDING MEDIUM HAVING IMAGE IDENTIFICATION PROGRAM RECORDED THEREON**

(57) An image identification system includes a first camera that includes a mask and an image sensor, the mask having a changeable mask pattern having a plurality of pinholes, and captures a computational image that is an image with blurring, an image identification unit that identifies the computational image using an identification model that uses the computational image captured by the first camera as input data and an identification result as output data, a mask identification unit that, after the mask pattern is changed, identifies the mask pattern that has been changed, and an identification model change unit that changes the identification model in accordance with the mask pattern identified by the mask identification unit.

FIG.1

IMAGE IDENTIFICATION SYSTEM
LIGHT EMITTING UNIT 108
FIRST CAMERA 101
OUTPUT UNIT 107
IMAGE IDENTIFICATION UNIT 103
MASK IDENTIFICATION UNIT 105
STORAGE UNIT 102
IDENTIFICATION MODEL CHANGE UNIT 106

EP 4 436 199 A1

## Description

## Technical Field

The present disclosure relates to a technique for identifying an image in an environment requiring privacy protection, particularly in home or indoor.

## Background Art

For example, Patent Literature 1 discloses an image identification system where an identifier receives a computational image captured by a light-field camera or the like to identify an object included in the computational image using a trained identification model.

The computational image is difficult to be visually recognized by a person due to blurring that is intentionally created due to an influence such as superimposition of a plurality of images each having different viewpoints, or a subject image that is less likely to be focused due to non-use of a lens. Thus, the computational image is preferably used to construct an image identification system in an environment requiring privacy protection, such as home or indoor.

On the other hand, in a case where the imaging pattern of the computational image is known, the computational image may be restored to an unblurred image. Therefore, a user who is a subject has an issue that the user cannot be sure whether privacy of the captured computational image is protected. This issue is referred to as a psychological load on a user.

In Patent Literature 1, no measure is taken against this issue, and thus a psychological load on the user is desired to be reduced by implementing effective technical measures.

## Citation List

## Patent Literature

Patent Literature 1: WO 2019/054092 A

## Summary of Invention

The present disclosure has been made to solve the above issue, and an object of the present disclosure is to provide a technique that enables a reduction of a psychological load on the user while protecting the privacy of a subject.

An image identification system according to one aspect of the present disclosure includes a first camera that includes a mask and an image sensor, the mask having a changeable mask pattern having a plurality of pinholes, and captures a computational image that is an image with blurring, an image identification unit that identifies the computational image using an identification model that uses the computational image captured by the first camera as input data and an identification result as output data, a mask identification unit that, after the mask pattern is changed, identifies the mask pattern that has been changed, and an identification model change unit that changes the identification model in accordance with the mask pattern identified by the mask identification unit.

According to the present disclosure, a psychological load on a user can be reduced while privacy of a subject is being protected.

## Brief Description of Drawings

FIG. 1 is a block diagram illustrating one example of a configuration of an image identification system according to a first embodiment of the present disclosure.
FIG. 2 is a flowchart illustrating one example of a procedure of image identification processing of the image identification system according to the first embodiment.
FIG. 3 is a schematic diagram illustrating one example of a multi-pinhole camera with no lens in the first embodiment.
FIG. 4 is a flowchart illustrating one example of a procedure of main processing of the image identification system at a time when a mask pattern is changed in the first embodiment.
FIG. 5 is a diagram illustrating one example of a mask having nine pinholes in the first embodiment.
FIG. 6 is a diagram illustrating one example of a mask having five pinholes in the first embodiment.
FIG. 7 is a diagram illustrating one example of a mask having one pinhole in the first embodiment.
FIG. 8 is a diagram illustrating one example of a mask having six pinholes in a fist modification of the first embodiment.
FIG. 9 is a diagram illustrating one example of a mask having two fan-shaped openings in the first modification of the first embodiment.
FIG. 10 is a diagram illustrating one example of a multi-pinhole mask having six pinholes, the mask being obtained by overlaying two masks, in the first modification of the first embodiment.
FIG. 11 is a diagram illustrating one example of a multi-pinhole mask having four pinholes, the mask being obtained by overlaying two masks, in the first modification of the first embodiment.
FIG. 12 is a diagram illustrating one example of a multi-pinhole mask having two pinholes, the mask being obtained by overlaying two masks, in the first modification of the first embodiment.
FIG. 13 is a schematic diagram illustrating an appearance of the multi-pinhole camera in the first modification of the first embodiment.
FIG. 14 is a schematic diagram illustrating a cross section of the multi-pinhole camera in the first modification of the first embodiment.

FIG. 15 is a schematic diagram illustrating a mask before a grip portion is rotated 90 degrees in the first modification of the first embodiment.

FIG. 16 is a schematic diagram illustrating a mask at a time when a grip portion is rotated 90 degrees in the first modification of the first embodiment.

FIG. 17 is a schematic diagram illustrating an appearance of the multi-pinhole camera in a second modification of the first embodiment.

FIG. 18 is a schematic diagram illustrating a cross section of the multi-pinhole camera in the second modification of the first embodiment.

FIG. 19 is a schematic diagram illustrating a cross section of the multi-pinhole camera in a case where a fixture is screwed into a first lens barrel all the way in the second modification of the first embodiment.

FIG. 20 is a schematic diagram illustrating a cross section of the multi-pinhole camera in a case where a fixture is screwed into the first lens barrel partway in the second modification of the first embodiment.

FIG. 21 is a schematic diagram illustrating a cross section of a multi-pinhole camera in a third modification of the first embodiment.

FIG. 22 is a block diagram illustrating one example of a configuration of an image identification system according to a fourth modification of the first embodiment of the present disclosure.

FIG. 23 is a flowchart illustrating one example of a procedure of main processing of the image identification system at a time when a mask pattern is changed in the fourth modification of the first embodiment.

FIG. 24 is a schematic diagram illustrating a cross section of a multi-pinhole camera in the fourth modification of the first embodiment.

FIG. 25 is a schematic diagram illustrating a cross section of a multi-pinhole camera in a fifth modification of the first embodiment.

FIG. 26 is a schematic diagram illustrating one example of a first mask configuring a multi-pinhole mask in the fifth modification of the first embodiment.

FIG. 27 is a schematic diagram illustrating one example of a second mask configuring the multi-pinhole mask in the fifth modification of the first embodiment.

FIG. 28 is a schematic diagram illustrating one example of a third mask configuring the multi-pinhole mask in the fifth modification of the first embodiment.

FIG. 29 is a schematic diagram illustrating one example of a multi-pinhole mask configured by overlaying the first mask, the second mask, and the third mask in the fifth modification of the first embodiment.

FIG. 30 is a schematic diagram illustrating one example of a multi-pinhole mask in a case where an external force is applied to the multi-pinhole mask in the fifth modification of the first embodiment.

FIG. 31 is a schematic diagram illustrating one example of a multi-pinhole mask in a case where an external force is further applied to the multi-pinhole mask in the fifth modification of the first embodiment.

FIG. 32 is a schematic diagram for explaining a configuration of a multi-pinhole mask in a sixth modification of the first embodiment.

FIG. 33 is a schematic diagram illustrating a state of a multi-pinhole mask in a case where four drive units are moved in on direction in the sixth modification of the first embodiment.

FIG. 34 is a schematic diagram illustrating a state of the multi-pinhole mask in a case where four drive units are moved in an outward direction from a central part of the multi-pinhole mask in the sixth modification of the first embodiment.

FIG. 35 is a flowchart illustrating one example of a procedure of main processing of the mask identification unit according to the first embodiment.

FIG. 36 is a diagram illustrating one example of a computational image obtained by the first camera imaging a light emitting unit in a lighting state in the first embodiment.

FIG. 37 is a diagram illustrating one example of a computational image obtained by the first camera imaging the light emitting unit in a light-off state in the first embodiment.

FIG. 38 is a diagram illustrating one example of a difference image obtained by subtracting the computational image including the light emitting unit in the light-off state from the computational image including the light emitting unit in the light-on state.

FIG. 39 is a flowchart illustrating one example of a procedure of main processing of a mask identification unit in a case where a mask pattern is identified by acquiring a light transport matrix (LTM) from the image captured by the first camera.

FIG. 40 is a schematic diagram illustrating one example of a plurality of Point Spread Functions (PSFs) acquired at a plurality of positions on an image.

FIG. 41 is a flowchart illustrating one example of a procedure of main processing of the mask identification unit according to the first embodiment.

FIG. 42 is a flowchart illustrating one example of a procedure of image quality determination processing of the mask identification unit according to the first embodiment.

FIG. 43 is a flowchart illustrating another example of the procedure of the image quality determination processing of the mask identification unit according to the first embodiment.

FIG. 44 is a block diagram illustrating one example of a configuration of an image identification system according to a second embodiment of the present disclosure.

FIG. 45 is a diagram illustrating one example of a mask having nine pinholes in the second embodiment.

FIG. 46 is a diagram illustrating one example of a mask having five pinholes in the second embodiment.

FIG. 47 is a diagram illustrating one example of a mask having one pinhole in the second embodiment.

FIG. 48 is a diagram illustrating one example of a multi-pinhole mask in which three masks are overlaid in the second embodiment.

FIG. 49 is a diagram illustrating one example of a multi-pinhole mask in which two masks are overlaid in the second embodiment.

FIG. 50 is a diagram for describing a configuration of reading mask ID information described in a mask constituting a multi-pinhole mask using a second camera in the second embodiment.

FIG. 51 is a diagram for describing a configuration of reading mask ID information described in a mask constituting a multi-pinhole mask 301a using a mirror in a modification of the second embodiment.

FIG. 52 is a block diagram showing one example of a configuration of an image identification system according to a third embodiment of the present disclosure.

FIG. 53 is a diagram illustrating one example of a mask having six pinholes in the third embodiment.

FIG. 54 is a diagram illustrating one example of a mask having two fan-shaped openings in the third embodiment.

FIG. 55 is a diagram illustrating one example of a multi-pinhole mask in which two masks are overlaid in the third embodiment.

FIG. 56 is a block diagram illustrating one example of a configuration of an image identification system according to a fourth embodiment of the present disclosure.

FIG. 57 is a block diagram illustrating one example of a configuration of a learning device in the fourth embodiment of the present disclosure.

FIG. 58 is a flowchart illustrating one example of a procedure of main processing of the learning device according to the fourth embodiment of the present disclosure.

**Description of Embodiments**

(Knowledge underlying present disclosure)

In home, indoor, or the like, various recognition techniques are important, such as human activity recognition of a person in an environment or person recognition of a device operator. In recent years, a technique called deep learning has attracted attention for object identification. The deep learning is machine learning using a neural network having a multilayer structure, and enables achieving more accurate identification performance as compared with a conventional method by using a large amount of learning data. In such object identification, image information is particularly effective. Various methods have been proposed for greatly improving conventional object identification capability by using a camera as an input device and performing deep learning using image information as an input.

Unfortunately, disposing a camera in home or the like causes a problem in that privacy is violated when a captured image leaks to the outside due to hacking or the like. Thus, a measure is required to protect privacy of a subject even when a captured image leaks to the outside.

Computational images captured by a light-field camera or the like are difficult to be visually recognized by a person due to blurring that is intentionally created due to an influence such as superimposition of a plurality of images each having a different viewpoint, or a subject image that is less likely to be focused due to non-use of a lens. Thus, the computational image is preferably used to construct an image identification system in an environment requiring privacy protection, such as home or indoor.

The image identification system disclosed in Patent Literature 1 is configured such that a target area is imaged by a light-field camera or the like, and a computational image acquired by the imaging is input to an identifier. This configuration allows the identifier to identify an object included in the computational image using a trained identification model. When the target area is imaged by a light-field camera or the like that captures a computational image as described above, privacy of a subject can be protected even when the captured image leaks to the outside due to the computational image that is difficult to be visually recognized by a person.

As another viewpoint of privacy protection, it is also important to reduce a psychological load on a user who is to be imaged by an image recognition device. Capturing a blurred image enables appeal for protecting privacy of a subject. However, when computational imaging information is set in a region unrelated to the user, such as a factory of a manufacturer, a psychological load on the user may increase due to a suspicion that the manufacturer can restore a normal image from a blurred image.

To solve the above problems, the following technique is disclosed.

(1) An image identification system according to one aspect of the present disclosure includes a first camera that includes a mask and an image sensor, the mask having a changeable mask pattern having a plurality of pinholes, and captures a computational image that is an image with blurring, an image identification unit that identifies the computational image using an identification model that uses the computational image captured by the first camera as input data and an identification result as output data, a mask identification unit that, after the mask pattern is changed, identifies the mask pattern that has been changed, and an identification model change unit that changes the identification model in accordance with the mask pattern identified by the mask identification unit.

According to this configuration, even if the mask pattern of the mask in which the plurality of pinholes are formed is changed, the identification model is changed in accordance with the changed mask pattern, thus preventing degradation of identification accuracy in image identification using the identification model. Furthermore, since the degree of blurring of the computational image captured by the first camera can be changed by changing the mask pattern of the mask, the psychological load on the user can be reduced while privacy of a subject is being protected.

(2) The image identification system according to (1) may further include a mask change unit that changes the mask pattern of the mask.

According to this configuration, the mask pattern of the mask is mechanically changed, thereby enhancing the accuracy of changing the mask pattern.

(3) In the image identification system according to (1) or (2), the first camera may include a multi-pinhole camera, the mask may include a multi-pinhole mask in which a plurality of masks are overlaid, the plurality of masks may respectively have mask patterns different from each other, and the mask pattern of the multi-pinhole mask may be changed when at least one of the plurality of masks is removed.

According to this configuration, the mask pattern can be easily changed by changing the number of the plurality of masks constituting the multi-pinhole mask.

(4) In the image identification system according to (1) or (2), the first camera may include a multi-pinhole camera, the mask may include a multi-pinhole mask in which a plurality of masks are overlaid, the plurality of masks may respectively have mask patterns different from each other, and at least one of the plurality of pinholes formed in one of the plurality of masks may be shielded by another one of the plurality of masks.

According to this configuration, when one of the plurality of masks is removed, the number of the pinholes of the multi-pinhole mask is changed, thereby easily changing the mask pattern.

(5) In the image identification system according to (1) or (2), the first camera may include a multi-pinhole camera, the mask may include a multi-pinhole mask in which a plurality of masks are overlaid, the plurality of masks may respectively have mask patterns different from each other, and at least one of the plurality of pinholes formed in one of the plurality of masks may be present on a position identical to a position of at least one of the plurality of pinholes formed in another one of the plurality of masks.

According to this configuration, the pinholes can be reliably formed in the multi-pinhole mask in which the plurality of masks are overlaid.

(6) In the image identification system according to (5), the one pinhole included in the one mask may have a size different from a size of the other pinhole included in the other mask at the position identical to the position of the one pinhole.

According to this configuration, when the one mask or the other mask is removed, the size of the pinhole is changed, thereby easily changing the mask pattern.

(7) In the image identification system according to any one of (1) to (6), the mask identification unit may acquire mask information about the mask pattern from the computational image captured by the first camera, and identify the mask pattern of the mask based on the acquired mask information.

According to this configuration, the changed mask pattern can be identified from the computational image captured by the first camera.

(8) The image identification system according to (7) may further include a light emitting unit, in which the mask identification unit may acquire a point spread function as the mask information from an image including the light emitting unit, the image being captured by the first camera.

According to this configuration, the changed mask pattern can be identified by using the point spread function.

(9) The image identification system according to any one of (1) to (6) may further include a mask identification information acquisition unit that acquires mask identification information for identifying the mask, in which the mask identification unit may identify the mask pattern of the mask based on the acquired mask identification information.

According to this configuration, the changed mask pattern can be identified from mask ID information provided in the mask.

(10) In the image identification system according to any one of (1) to (6), the mask may include a first mask and a second mask overlaid on the first mask, the system may further include a marker position specifying unit that specifies positions of a plurality of markers formed on each of the first mask and the second mask to detect a rotation angle of the first mask with respect to the second mask, and the mask identification unit may detect the rotation angle of the first mask with respect to the second mask based on the specified positions of the plurality of markers and identify the mask pattern of the mask based on the detected rotation angle.

According to this configuration, the changed mask pattern can be identified from the rotation angle of the first mask with respect to the second mask, the rotation angle being detected based on the positions of the markers provided on the mask.

(11) The image identification system according to any one of (1) to (10) may further include a storage unit that stores a plurality of mask patterns and a plurality of identification models in association with each other, in which the identification model change unit may specify an identification model associated with the mask pattern identified by the mask identification unit from among the plurality of identification models stored in the storage unit, and change the current identification model to the specified identification model.

According to this configuration, since the plurality of mask patterns and the plurality of identification models are stored in advance in the storage unit in association with each other, the identification model associated with the changed mask pattern can be easily specified, and the identification model can be easily changed.

(12) The image identification system according to any one of (1) to (10) may further include a learning unit that acquires a first learning image captured by a second camera that captures an image without blurring or an image with blurring less than blurring by the first camera and a correct answer label given to the first learning image, generates a second learning image with blurring based on the mask pattern identified by the mask identification unit and the first learning image, and performs machine learning using the second learning image and the correct answer label to create an identification model for identifying the computational image captured by the first camera, in which the identification model change unit may change the current identification model to the identification model created by the learning unit.

According to this configuration, since a new identification model corresponding to the changed mask pattern can be created, it is possible to prevent degradation of identification accuracy in image identification using the identification model.

Further, the present disclosure can be implemented not only as the image identification system having the characteristic configuration as described above, but also as an image identification method or the like for executing characteristic processing corresponding to the characteristic configuration of the image identification system. In addition, the characteristic processing included in such an image identification method can be implemented as a computer program to be executed by a computer. Therefore, even other aspects below can achieve an effect as in the above image identification system.

(13) An image identification method according to another aspect of the present disclosure is an image identification method in an image identification system, the method including acquiring a computational image that is an image with blurring captured by a first camera that includes a mask and an image sensor, the mask having a changeable mask pattern having a plurality of pinholes, identifying the computational image using an identification model that uses the computational image captured by the first camera as input data and an identification result as output data, after the mask pattern is changed, identifying the mask pattern that has been changed, and changing the identification model in accordance with the identified mask pattern.

(14) An image identification program according to another aspect of the present disclosure is a program that causes a computer to perform operations including acquiring a computational image that is an image with blurring captured by a first camera that includes a mask and an image sensor, the mask having a changeable mask pattern having a plurality of pinholes, identifying the computational image using an identification model that uses the computational image captured by the first camera as input data and an identification result as output data, after the mask pattern is changed, identifying the mask pattern that has been changed, and changing the identification model in accordance with the identified mask pattern.

(15) A computer-readable non-temporary recording medium according to another aspect of the present disclosure includes an image identification program recorded therein, the image identification program causing a computer to perform operations including acquiring a computational image that is an image with blurring captured by a first camera that includes a mask and an image sensor, the mask having a changeable mask pattern having a plurality of pinholes, identifying the computational image using an identification model that uses the computational image captured by the first camera as input data and an identification result as output data, after the mask pattern is changed, identifying the mask pattern that has been changed, and changing the identification model in accordance with the identified mask pattern.

Hereinafter, embodiments of the present disclosure will be described with reference to the drawings. Note that elements denoted by the same reference numerals in different drawings represent the same or corresponding elements. Further, each of the embodiments to be described below shows one specific example of the present disclosure. Numerical values, shapes, constituents, steps, order of steps, and the like shown in the embodiments below are merely one example, and are not intended to limit the present disclosure. Furthermore, a constituent that is not described in an independent claim representing the highest concept among constituents in the embodiments below is described as an arbitrary constituent. Furthermore, in all the embodiments, respective contents can be combined.

(First embodiment)

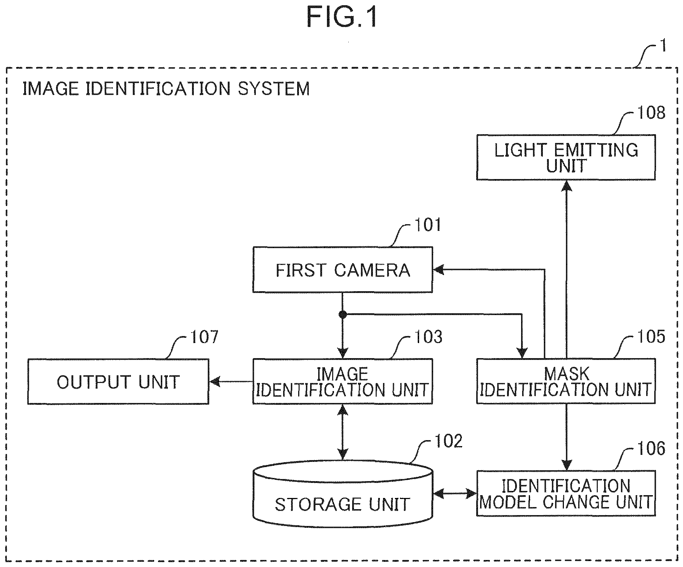

FIG. 1 is a block diagram illustrating one example of a configuration of an image identification system 1 according to a first embodiment of the present disclosure.

The image identification system 1 of the first embodiment includes a first camera 101, a storage unit 102 that stores an identification model, an image identification unit 103, a mask identification unit 105, an identification model change unit 106, an output unit 107, and a light emitting unit 108. The mask identification unit 105, the identification model change unit 106, and the image identification unit 103 include a processor such as a central processing unit (CPU) and a memory such as a semiconductor memory. The storage unit 102 is a hard disk drive (HDD), a solid state drive (SSD), a semiconductor memory, or the like. The output unit 107 is a display device, a speaker, or the like.

The image identification system 1 may include, for example, an image identification device including the storage unit 102, the image identification unit 103, the mask identification unit 105, and the identification model change unit 106, and may be configured so that the first camera 101, the output unit 107, and the light emitting unit 108 are connected to the image identification device. In addition, the image identification device may be a server. Further, the image identification system 1 may include, for example, an image identification device including the first camera 101, the storage unit 102, the image identification unit 103, the mask identification unit 105, the identification model change unit 106, and the output unit 107, and may be configured so that the light emitting unit 108 is connected to the image identification device.

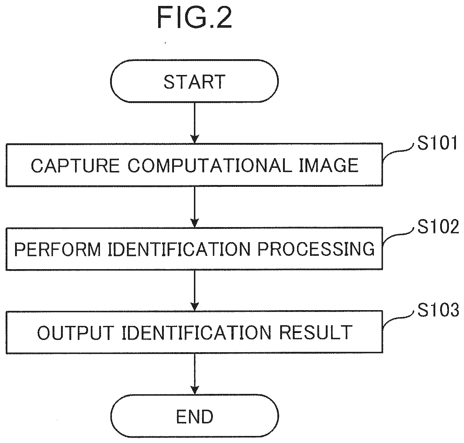

FIG. 2 is a flowchart illustrating one example of a procedure of image identification processing of the image identification system 1 according to the first embodiment. The flowchart illustrates a flow of the image identification processing of the image identification system 1.

Unlike a normal camera that captures a normal image without blurring, the first camera 101 captures a computational image that is an image with blurring (step S101). Although a subject in the computational image cannot be recognized by a person who views the computational image itself due to intentionally created blurring, an image can be generated from the computational image by performing image processing on the captured computational image, the image being able to be recognized by the person or identified by the image identification unit 103.

The first camera 101 includes a mask having a changeable mask pattern in which a plurality of pinholes are formed, and an image sensor. Further, the first camera 101 is either a coded aperture camera including a mask having a mask pattern having a transmittance different for each region, or a multi-pinhole camera in which a mask having a mask pattern having a plurality of pinholes is disposed on a light receiving surface of the image sensor. The multi-pinhole camera is disclosed in conventional literature (e.g. M. Salman Asif, Ali Ayremlou, Ashok Veeraraghavan, Richard Baraniuk, and Aswin Sankaranarayanan, "FlatCam: Replacing Lenses with Masks and Computation", International Conference on Computer Vision Workshop (ICCVW), 2015, pp. 663-666). The mask pattern of the mask is configured to be changeable.

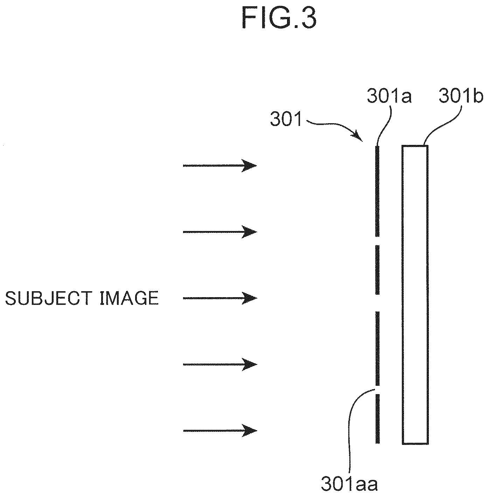

FIG. 3 is a schematic diagram illustrating one example of a multi-pinhole camera 301 with no lens in the first embodiment.

The multi-pinhole camera 301 is one example of the first camera 101. The multi-pinhole camera 301 illustrated in FIG. 3 includes a multi-pinhole mask 301a and an image sensor 301b. The multi-pinhole mask 301a is disposed at a predetermined interval from the image sensor 301b. The multi-pinhole mask 301a has a plurality of pinholes 301aa disposed at random or equal intervals. The plurality of pinholes 301aa are also referred to as a multi-pinhole. The image sensor 301b acquires an image of a subject through each pinhole 301aa. The image acquired through the pinholes 301aa is referred to as a pinhole image.

The pinhole image of the subject differs depending on a position and a size of each pinhole 301aa, so that the image sensor 301b acquires a superimposed image (multiple image) in a state where a plurality of pinhole images are superimposed while being slightly shifted. The positions of the plurality of pinholes 301aa affect the position of the subject projected on the image sensor 301b, and the sizes of the pinholes 301aa affect the degree of blurring of the pinhole image.

Using the multi-pinhole mask 301a enables acquiring a plurality of pinhole images each having a different position and a different degree of blurring while superimposing the images. That is, the multi-pinhole camera 301 can acquire a computational image in which multiple images and blurring are intentionally created. Thus, the image to be captured becomes a superimposed image, and the multi-pinhole camera 301 can acquire a blurred image in which privacy of the subject is protected. Further, when the pinholes are changed in number, position, and size, images each having a different blurring pattern can be acquired.

Next, the image identification unit 103 performs identification processing on the computational image captured by the first camera 101 (step S102). Using the identification model that is a learning result of the learning device, the image identification unit 103 identifies, as to the computational image captured by the first camera 101, category information about a subject, such as a person (including an action or expression of the person), an automobile, a bicycle, or a traffic light included in the computational image, and position information about the subject. Machine learning such as deep learning using a multilayer neural network may be used for learning for creating an identification model.

The image identification unit 103 identifies the computational image using an identification model that uses the computational image captured by the first camera 101 as input data and the identification result as output data.

Next, the output unit 107 outputs the identification result from the image identification unit 103 (step S103). The output unit 107 may include an interface unit to present the identification result to the user with an image, text, voice, or the like. In addition, the output unit 107 may include a device control unit, and a control method may be changed in accordance with the identification result.

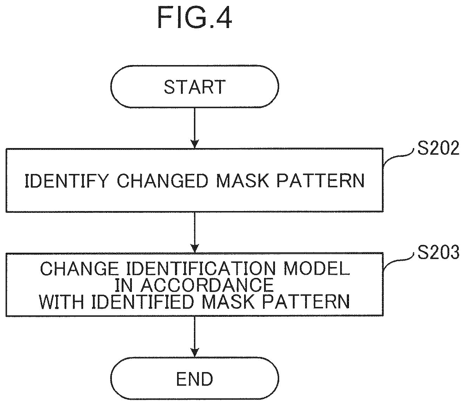

Further, FIG. 4 is a flowchart illustrating one example of a procedure of main processing of the image identification system 1 at a time when a mask pattern is changed in the first embodiment.

When the mask pattern of the first camera 101 is changed, the mask identification unit 105 identifies the mask pattern of the mask of the first camera 101 (step S202). Note that the processing in step S202 may be performed periodically, for example, every 1 minute. After the mask pattern is changed, the mask identification unit 105 identifies the changed mask pattern.

Further, when the user changes the mask pattern, the input unit of the image identification system may receive an input of a mask pattern identification instruction from the user. Then, when the input of the mask pattern identification instruction is received, the mask identification unit 105 may identify the changed mask pattern. In this case, the image identification system 1 may include the input unit instead of the light emitting unit 108.

The mask identification unit 105 may determine whether the point spread function in the image captured by the first camera 101 has been changed. Then, in a case where the point spread function is changed, the mask identification unit 105 may determine that the mask pattern has been changed and identify the changed mask pattern.

Next, the identification model change unit 106 changes the identification model in accordance with the mask pattern identified by the mask identification unit 105 (step S203). The identification model change unit 106 changes the identification model in accordance with the mask pattern identified by the mask identification unit 105.

Here, the storage unit 102 stores a plurality of mask patterns and a plurality of identification models in advance in association with each other. The identification model change unit 106 specifies an identification model associated with the mask pattern identified by the mask identification unit 105 from among the plurality of identification models stored in the storage unit 102. The identification model change unit 106 changes the current identification model used by the image identification unit 103 to the specified identification model, and stores the changed identification model in the storage unit 102.

Note that the storage unit 102 may store a plurality of pieces of mask information and the plurality of identification models in advance in association with each other. The mask information is, for example, a point spread function. The identification model change unit 106 may specify an identification model associated with the mask information acquired by the mask identification unit 105 from among the plurality of identification models stored in the storage unit 102.

Further, in a case where the mask information is the point spread function, the identification model change unit 106 may specify an identification model associated with a point spread function most similar to the point spread function acquired by the mask identification unit 105 from among the plurality of identification models stored in the storage unit 102. The identification model change unit 106 determines a correlation (similarity) between the acquired point spread function and a point spread function stored in advance to be able to specify the point spread function most similar to the acquired point spread function.

In a case where the first camera 101 is the multi-pinhole camera 301, the multi-pinhole mask 301a corresponding to the mask of the first camera 101 has a configuration in which a plurality of masks are overlaid. For example, the user changes the mask pattern of the multi-pinhole mask 301a by removing at least one of the plurality of masks disposed in an overlaid manner.

In the first embodiment, the first camera 101 is the multi-pinhole camera 301, the mask is the multi-pinhole mask 301a in which a plurality of masks are overlaid, and the plurality of masks respectively have different mask patterns. When at least one of the plurality of masks is removed, the mask pattern of the multi-pinhole mask 301a is changed.

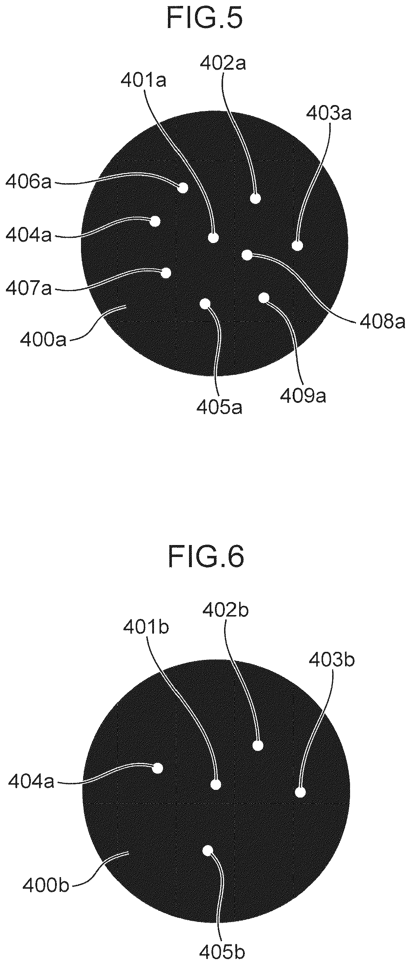

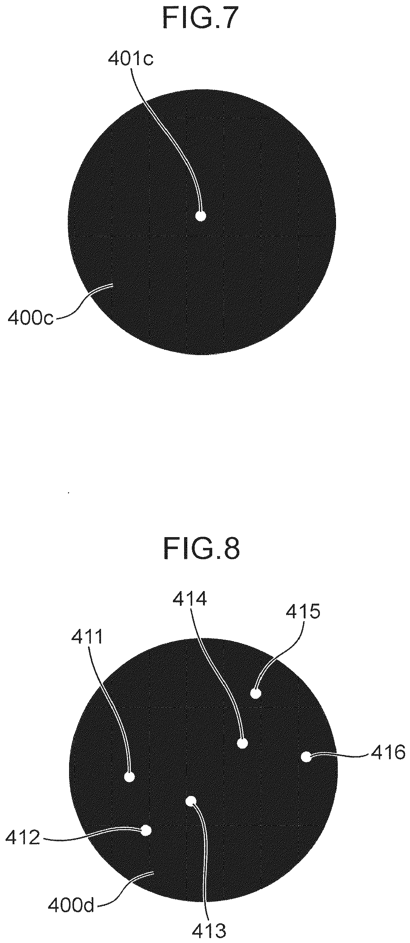

FIGS. 5 to 7 are schematic diagrams for explaining one example of a plurality of masks constituting the multi-pinhole mask in the first embodiment. FIG. 5 is a diagram illustrating one example of a mask 400a having nine pinholes in the first embodiment, FIG. 6 is a diagram illustrating one example of a mask 400b having five pinholes in the first embodiment, and FIG. 7 is a diagram illustrating one example of a mask 400c having one pinhole in the first embodiment.

The nine pinholes 401a to 409a illustrated in FIG. 5 may have identical size, or one of the nine pinholes may have a size different from sizes of the other pinholes. The same applies to the five pinholes 401b to 405b illustrated in FIG. 6. In addition, the nine pinholes 401a to 409a illustrated in FIG. 5 may have a size identical to or different from the sizes of the five pinholes 401b to 405b illustrated in FIG. 6 and the size of one pinhole 401c illustrated in FIG. 7.

These masks 400a to 400c are fixed so that the pinhole 401a, the pinhole 401b, and the pinhole 401c are aligned with each other, the pinhole 402a and the pinhole 402b are aligned with each other, the pinhole 403a and the pinhole 403b are aligned with each other, the pinhole 404a and the pinhole 404b are aligned with each other, and the pinhole 405a and the pinhole 405b are aligned with each other. At this time, the pinholes 402a to 405a of the mask 400a and the pinholes 402b to 405b of the mask 400b are fixed so as to be aligned with a shielding portion where the pinhole 401c is not formed in the mask 400c. In addition, in the mask 400a, among the eight pinholes 402a to 409a excluding the central pinhole 401a, the four pinholes 406a to 409a at positions different from the pinholes 402b to 405b are fixed so as to be aligned with the shielding portion where the pinholes 401b to 405b are not formed in the mask 400b.

That is, at least one of the plurality of pinholes formed in one of the plurality of masks is at the position identical to the position of as at least one of the plurality of pinholes formed in another one of the plurality of masks. In addition, at least one of the plurality of pinholes formed in one of the plurality of masks is shielded by another one of the plurality of masks.

In the multi-pinhole mask 301a where the three masks 400a, 400b, and 400c are overlaid as described above, one pinhole constituted by the pinholes 401a, 401b, and 401c is formed. Therefore, it can be said that the multi-pinhole mask 301a where the three masks 400a, 400b, and 400c are overlaid has a mask pattern where one pinhole is formed. In a case where each of the three masks 400a, 400b, and 400c has a sufficiently small thickness, the multi-pinhole mask 301a where the three masks 400a, 400b, and 400c are overlaid can be said to be substantially equal to the mask where one pinhole is formed, that is, the mask 400c illustrated in FIG. 7.

When imaging is performed by the multi-pinhole camera 301 including the multi-pinhole mask 301a where the three masks 400a, 400b, and 400c are overlaid as described above, among light emitted from a subject included in an imaging range, light that has passed through the pinholes 401a, 401b, and 401c constituting the above-described one pinhole is received on a light receiving surface of the image sensor 301b.

In the multi-pinhole mask 301a where the three masks 400a, 400b, and 400c are overlaid, when the mask 400c is removed by the user, the multi-pinhole mask 301a has a configuration where the two masks 400a and 400b are overlaid.

In the multi-pinhole mask 301a where the two masks 400a and 400b are overlaid, five pinholes are formed. The five pinholes include (1) a pinhole constituted by the pinholes 401a and 401b, (2) a pinhole constituted by the pinholes 402a and 402b, (3) a pinhole constituted by the pinholes 403a and 403b, (4) a pinhole constituted by the pinholes 404a and 404b, and (5) a pinhole constituted by the pinholes 405a and 405b. Therefore, it can be said that the multi-pinhole mask 301a where the two masks 400a and 400b are overlaid has a mask pattern where five pinholes are formed. Further, in a case where each of the two masks 400a and 400b has a sufficiently small thickness, the multi-pinhole mask 301a where the two masks 400a and 400b are overlaid can be said to be substantially equal to the mask where five pinholes are formed, that is, the mask 400b illustrated in FIG. 6.

When imaging is performed by the multi-pinhole camera 301 having the multi-pinhole mask 301a where the two masks 400a and 400b are overlaid, among light emitted from a subject included in an imaging range, (1) light passing through the pinholes 401a and 401b constituting the multi-pinhole, (2) light passing through the pinholes 402a and 402b constituting the multi-pinhole, (3) light passing through the pinholes 403a and 403b constituting the multi-pinhole, (4) light passing through the pinholes 404a and 404b constituting the multi-pinhole, and (5) light passing through the pinholes 405a and 405b constituting the multi-pinhole are received on the light receiving surface of the image sensor 301b.

As described above, when the mask 400c is removed from the three masks 400a, 400b, and 400c, the mask pattern of the multi-pinhole mask 301a is changed from the mask pattern where one pinhole is formed to the mask pattern where five pinholes are formed.

In a case where the mask 400b is removed by the user from the multi-pinhole mask 301a where the two masks 400a and 400b are overlaid, the multi-pinhole mask 301a is configured only by the mask 400a. The multi-pinhole mask 301a constituted by one mask 400a becomes a mask where nine pinholes are formed, that is, the mask 400a illustrated in FIG. 5 having a mask pattern where nine pinholes are formed.

As described above, when the mask 400b is removed from the two masks 400a and 400b, the mask pattern of the multi-pinhole mask 301a is changed from the mask pattern where the five pinholes are formed to the mask pattern where the nine pinholes are formed.

As described above, in order to remove the mask 400b and the mask 400c, the mask 400a, the mask 400b, and the mask 400c may be fixed with a detachable adhesive such as a seal, and the mask pattern may be changed by the user manually removing each of the mask 400b and the mask 400c from the mask 400a.

Certainly, the user may change the mask pattern by adding a mask instead of removing some masks. In a state where the mask 400a illustrated in FIG. 5 where the nine pinholes are formed is installed as the multi-pinhole mask 301a, the user may fix the mask 400b to the mask 400a so that the pinhole 401a and the pinhole 401b are aligned with each other, the pinhole 402a and the pinhole 402b are aligned with each other, the pinhole 403a and the pinhole 403b are aligned with each other, the pinhole 404a and the pinhole 404b are aligned with each other, and the pinhole 405a and the pinhole 405b are aligned with each other. As a result, the multi-pinhole mask 301a has a configuration where the two masks 400a and 400b are overlaid, and the multi-pinhole mask 301a can be said to have a mask pattern where five pinholes are formed as described above. Further, in a case where each of the two masks 400a and 400b has a sufficiently small thickness, the multi-pinhole mask 301a where the two masks 400a and 400b are overlaid can be said to be substantially equal to the mask where five pinholes are formed, that is, the mask 400b illustrated in FIG. 6.

Further, the user fixes the mask 400c to the mask 400b so that the pinhole 401a, the pinhole 401b, and the pinhole 401c are aligned with each other in the state where the two masks 400a and 400b are overlaid. As a result, the multi-pinhole mask 301a has a configuration where the three masks 400a, 400b, and 400c are overlaid, and the multi-pinhole mask 301a can be said to be substantially equal to the mask where one pinhole is formed as described above, that is, the mask 400c illustrated in FIG. 7.

Certainly, the user may change the mask pattern by replacing one mask instead of removing one of the plurality of masks. In a state where the mask 400a illustrated in FIG. 5 where the nine pinholes are formed is installed as the multi-pinhole mask 301a, the user can change the mask 400a to the mask 400b illustrated in FIG. 6 to change the mask pattern of the multi-pinhole mask 301a from the mask pattern where the nine pinholes are formed to the mask pattern where the five pinholes are formed.

Furthermore, in the first embodiment, one pinhole included in one of the plurality of masks has a size equal to a size of another pinhole included in another mask at the same position as the above-described one pinhole among the plurality of masks, but the present disclosure is not particularly limited thereto. For example, the one pinhole included in one of the plurality of masks may have a size different from the size of the other pinhole included in the other mask at the same position as of the one pinhole described above among the plurality of masks. For example, even if five pinholes including the pinhole 401b to the pinhole 405b are formed in the mask 400b, and five pinholes of the mask 400a, that is, the pinhole 401a to the pinhole 405a are aligned with the pinhole 401b to the pinhole 405b of the mask 400b, at least one pinhole among the five pinholes of the mask 400a may have a size greater than the size of the pinhole at the same position as the pinhole described above in the mask 400b. As a result, the mask pattern of the multi-pinhole mask where the mask 400a and the mask 400b are overlaid can be made different from the mask pattern of the multi-pinhole mask including only the mask 400a.

Certainly, the user may change the mask pattern by rotating one of the plurality of masks instead of removing one of the plurality of masks.

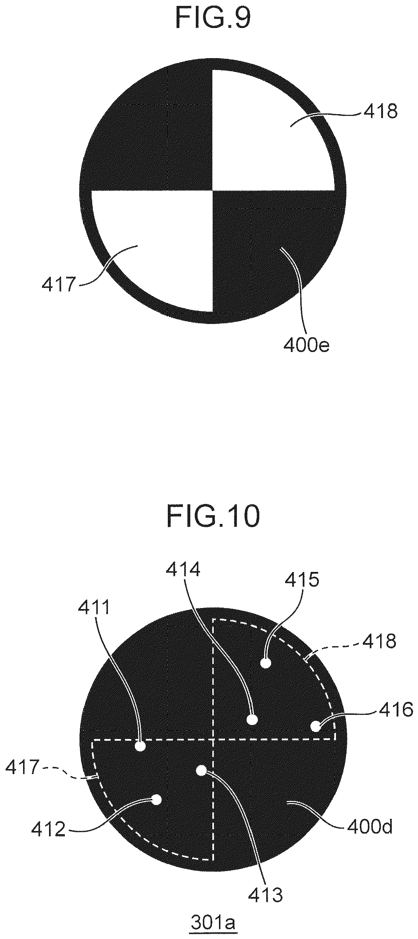

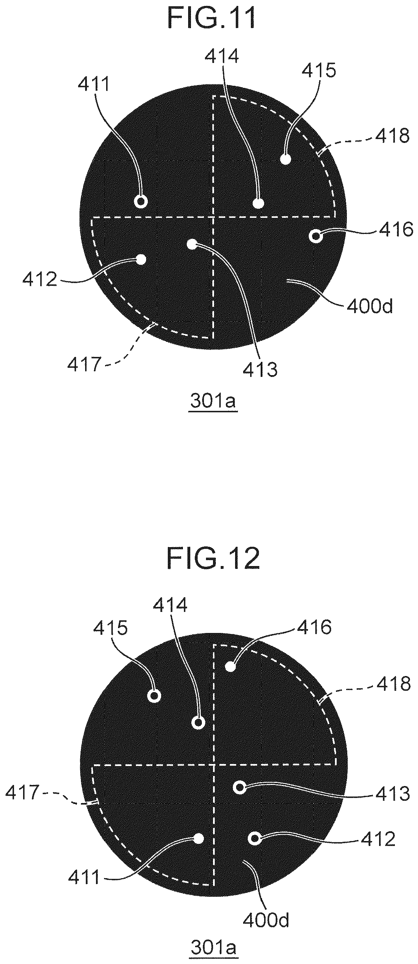

FIGS. 8 and 9 are schematic diagrams for explaining one example of a plurality of masks constituting the multi-pinhole mask 301a in a first modification of the first embodiment. FIG. 8 is a diagram illustrating one example of a mask 400d having six pinholes in the first modification of the first embodiment, and FIG. 9 is a diagram illustrating one example of a mask 400e having two fan-shaped openings in the first modification of the first embodiment. FIG. 10 is a diagram illustrating one example of the multi-pinhole mask 301a that has six pinholes and is obtained by overlaying the two masks 400d and 400e in the first modification of the first embodiment, FIG. 11 is a diagram illustrating one example of the multi-pinhole mask 301a that has four pinholes and is obtained by overlaying the two masks 400d and 400e in the first modification of the first embodiment, and FIG. 12 is a diagram illustrating one example of the multi-pinhole mask 301a that has two pinholes and is obtained by overlaying the two masks 400d and 400e in the first modification of the first embodiment.

The multi-pinhole mask 301a has a configuration where the mask 400d illustrated in FIG. 8 and the mask 400e illustrated in FIG. 9 are overlaid, and the mask 400d is rotatable. The mask 400e is fixed. A plurality of pinholes 411 to 416 corresponding to the multi-pinhole are formed in the mask 400d. Fan-shaped openings 417 and 418 are formed in the mask 400e. The center angles of the fan-shaped opening 417 and 418 are 90 degrees, and the radii of the openings 417 and 418 substantially coincide with the radius of the circular mask 400e. The opening 417 and the opening 418 are formed so as to be point-symmetric with respect to the center point of the mask 400e. In a case where the two masks 400d and 400e are overlaid as illustrated in FIG. 10, the six pinholes 411 to 416 of the mask 400d are aligned with the two fan-shaped openings 417 and 418 of the mask 400e. Therefore, the multi-pinhole mask 301a has a mask pattern where six pinholes are formed.

When the mask 400d is rotated 30 degrees clockwise from the state of FIG. 10, the two masks 400d and 400e are overlaid as illustrated in FIG. 11. At this time, the pinholes 412, 143, 414, and 415 of the mask 400d are aligned with the openings 417 and 418 (two fan-shaped regions indicated by white dotted lines) of the mask 400e located on the far side of the mask 400d, but the pinholes 411 and 416 of the mask 400d are overlaid on a shielding portion of the mask 400e. Therefore, the multi-pinhole mask 301a illustrated in FIG. 11 has a mask pattern where four pinholes are formed. That is, when the mask 400d in the multi-pinhole mask 301a illustrated in FIG. 10 rotates 30 degrees clockwise, the mask pattern of the multi-pinhole mask 301a is changed from the mask pattern where six pinholes are formed to the mask pattern where four pinholes are formed.

On the other hand, when the mask 400d is rotated 30 degrees counterclockwise from the state of FIG. 10, the two masks 400d and 400e are overlaid as illustrated in FIG. 12. At this time, the pinholes 411 and 416 of the mask 400d are aligned with the opening of the mask 400e, but the pinholes 412, 143, 414, and 415 of the mask 400d are overlaid on the shielding portion of the mask 400e. Therefore, the multi-pinhole mask 301a has a mask pattern where two pinholes are formed. That is, when the mask 400d in the multi-pinhole mask 301a illustrated in FIG. 10 rotates 30 degrees counterclockwise, the mask pattern of the multi-pinhole mask 301a is changed from the mask pattern where six pinholes are formed to the mask pattern where two pinholes are formed.

Certainly, the mask 400d may be fixed, and the mask 400e may be rotatable. Further, both the mask 400d and the mask 400e may be rotatable.

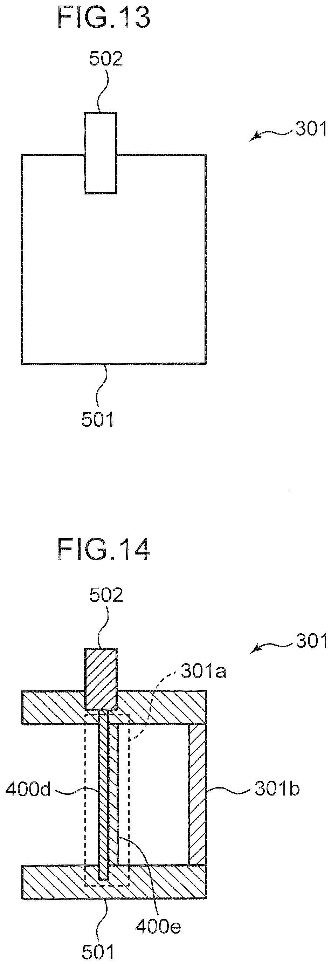

Thereafter, a configuration of the multi-pinhole camera 301 where a user can arbitrarily rotate a mask in the first modification of the first embodiment will be described with reference to FIGS. 13 to 16.

FIG. 13 is a schematic diagram illustrating an appearance of the multi-pinhole camera 301 in the first modification of the first embodiment, and FIG. 14 is a schematic diagram illustrating a cross section of the multi-pinhole camera 301 in the first modification of the first embodiment. FIG. 13 is a side view of the multi-pinhole camera 301. As for the multi-pinhole camera 301 illustrated in FIG. 14, the cross section of the multi-pinhole camera 301 illustrated in FIG. 13 is shown.

The multi-pinhole camera 301 includes the multi-pinhole mask 301a where the mask 400d that is rotatable and the mask 400e that does not rotate with respect to a housing 501 are overlaid. A grip portion 502 operable by a user is connected to the rotatable mask 400d. Further, the user can fix or rotate the mask 400d with respect to the housing 501 by gripping and operating the grip portion 502. In such a mechanism, a screw may be provided in the grip portion 502, the mask 400d may be fixed by tightening the screw, and the mask 400d may be rotatable by loosening the screw.

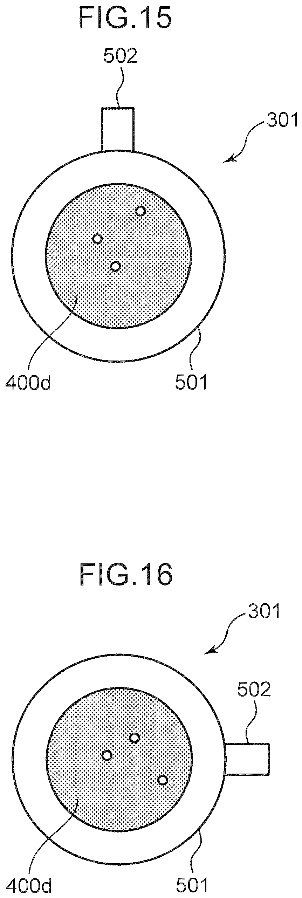

FIG. 15 is a schematic diagram illustrating the mask 400d before the grip portion 502 is rotated 90 degrees in the first modification of the first embodiment. FIG. 16 is a schematic diagram illustrating the mask 400d at a time when the grip portion 502 is rotated 90 degrees in the first modification of the first embodiment. FIGS. 15 and 16 are views of the multi-pinhole camera 301 viewed from the subject side.

As illustrated in FIG. 16, when the user rotates the grip portion 502 90 degrees, the mask 400d rotates 90 degrees. In such a manner, the mask 400d can be rotated when the user moves the grip portion 502. As a result, the mask pattern of the multi-pinhole mask 301a can be changed.

Furthermore, in the multi-pinhole camera 301 where the mask can be arbitrarily rotated by the user, the plurality of pinholes of the multi-pinhole mask 301a may be disposed so as not to be rotationally symmetric with respect to a vertical line passing through a rotation axis of the mask 400d as illustrated in FIG. 15. When the plurality of pinholes are disposed asymmetrically in this manner, various mask patterns can be implemented by the user rotating the mask 400d.

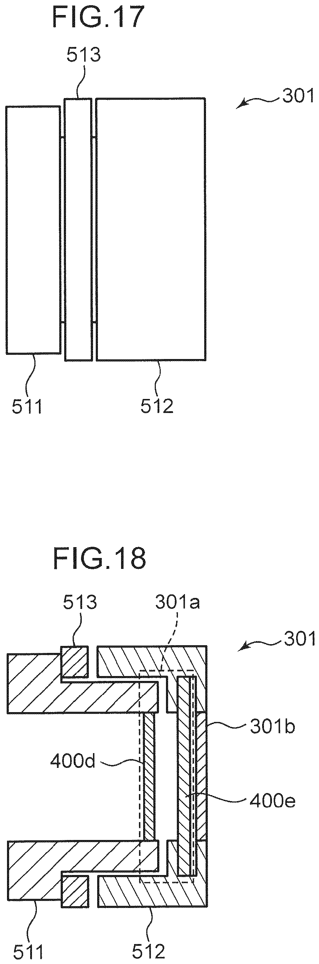

As a matter of course, the multi-pinhole camera 301, in which the user can arbitrarily rotate the mask, may be configured without the grip portion 502. Another configuration of the multi-pinhole camera 301 where a user can arbitrarily rotate the mask in a second modification of the first embodiment will be described with reference to FIGS. 17 to 20.

FIG. 17 is a schematic diagram illustrating an appearance of the multi-pinhole camera 301 in the second modification of the first embodiment, and FIG. 18 is a schematic diagram illustrating a cross section of the multi-pinhole camera 301 in the second modification of the first embodiment. FIG. 17 is a side view of the multi-pinhole camera 301. As for the multi-pinhole camera 301 illustrated in FIG. 18, the cross section of the multi-pinhole camera 301 illustrated in FIG. 17 is shown.

The multi-pinhole camera 301 includes the multi-pinhole mask 301a including the mask 400d that is rotatable and the mask 400e that does not rotate. The rotatable mask 400d is fixed to a first lens barrel 511. Further, the image sensor 301b and the non-rotating mask 400d are installed in a second lens barrel 512 different from the first lens barrel 511. The first lens barrel 511 and the second lens barrel 512 are rotatable with a thread configuration. That is, the second lens barrel 512 is provided outside the first lens barrel 511, and a male thread is cut outside the first lens barrel 511 serving as a joint portion, and a female thread is cut inside the second lens barrel 512. Further, the first lens barrel 511 includes the male thread to which a fixture 513 is first attached, and then the second lens barrel 512 is attached. As with the second lens barrel 512, a female thread is cut also in the fixture 513. With this configuration described above, when the first lens barrel 511 is screwed into the second lens barrel 512, a screwing depth is changed in accordance with a position of screwing the fixture 513 into the first lens barrel 511, and thus a rotation angle of the rotatable mask 400d can be changed.

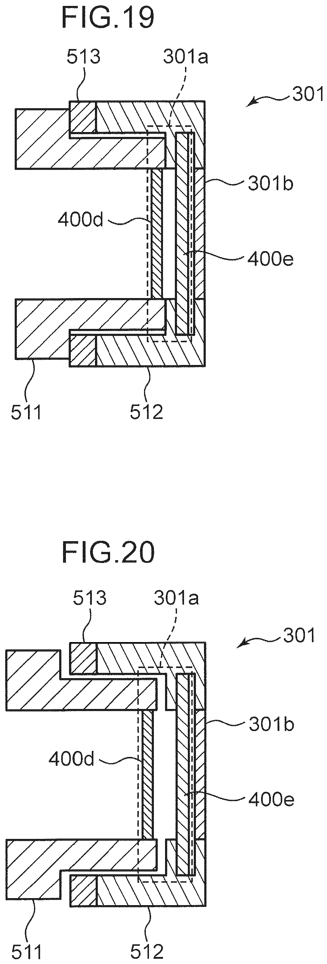

FIGS. 19 and 20 are schematic diagrams illustrating that the screwing depth changes and the rotation angle of the rotatable mask 400d changes in accordance with a position of screwing of the fixture 513 into the first lens barrel 511.

FIG. 19 is a schematic diagram illustrating a cross section of the multi-pinhole camera 301 in a case where the fixture 513 is screwed into the first lens barrel 511 all the way in the second modification of the first embodiment, and FIG. 20 is a schematic diagram illustrating a cross section of the multi-pinhole camera 301 in a case where the fixture 513 is screwed into the first lens barrel 511 partway in the second modification of the first embodiment.

As illustrated in FIG. 19, in the case where the fixture 513 is screwed into the first lens barrel 511 all the way, the second lens barrel 512 can be screwed into the first lens barrel 511 all the way. In contrast, in the case where the fixture 513 is screwed into the first lens barrel 511 only partway, the second lens barrel 512 can be screwed into the first lens barrel 511 only partway, as illustrated in FIG. 20. Thus, the screwing depth changes in accordance with the position of screwing of the fixture 513 into the first lens barrel 511, and the rotation angle of the rotatable mask 400d can be changed.

Further, in a third modification of the first embodiment, the multi-pinhole mask may be achieved by a user making an arbitrary hole in the mask.

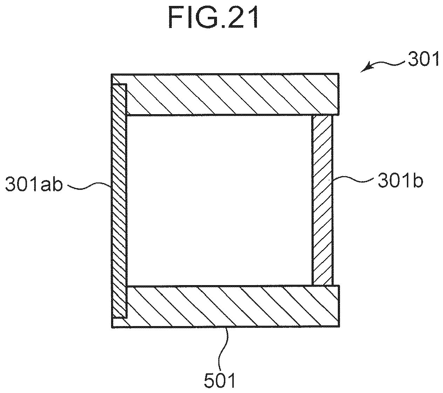

FIG. 21 is a schematic diagram illustrating a cross section of the multi-pinhole camera 301 in the third modification of the first embodiment. In FIG. 21, the same components as those in FIGS. 13 to 16 are denoted by the same reference numerals, and description thereof is omitted. The multi-pinhole camera 301 in the third modification of the first embodiment includes an image sensor 301b and a mask 301ab attached in front of the image sensor 301b. The user can make a hole in an arbitrary part of the mask 301ab. The mask 301ab initially has no pinhole. A user can make holes in the mask 301ab at a plurality of arbitrary positions using a needle or the like to create a multi-pinhole mask having an arbitrary mask pattern.

Next, an image identification system in a fourth modification of the first embodiment will be described.

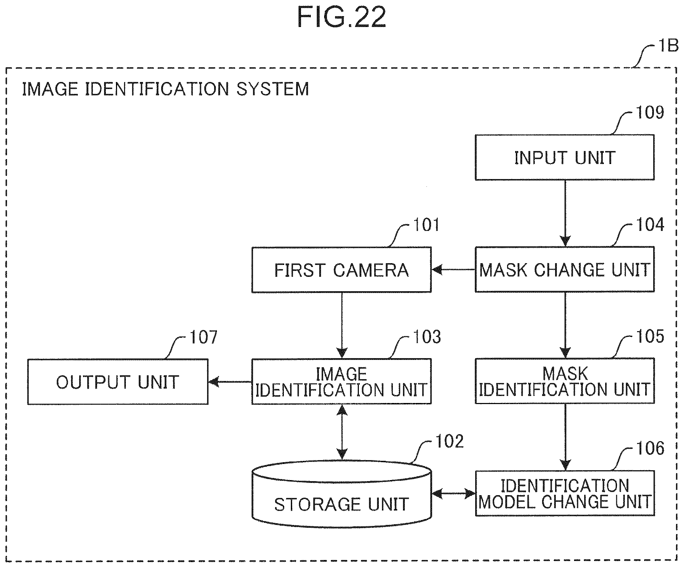

FIG. 22 is a block diagram illustrating one example of the configuration of an image identification system 1B according to the fourth modification of the first embodiment of the present disclosure. Note that, in the image identification system 1B illustrated in FIG. 22, the same components as those of the image identification system 1 illustrated in FIG. 1 are denoted by the same reference numerals, and description thereof is omitted.

The image identification system 1B includes the first camera 101, the storage unit 102 that stores an identification model, the image identification unit 103, a mask change unit 104, the mask identification unit 105, the identification model change unit 106, the output unit 107, and an input unit 109.

The image identification system 1B may include, for example, an image identification device including the storage unit 102, the image identification unit 103, the mask change unit 104, the mask identification unit 105, and the identification model change unit 106, and may be configured so that the first camera 101, the output unit 107, and the input unit 109 are connected to the image identification device. In addition, the image identification device may be a server. Further, the image identification system 1B may be, for example, an image identification device including the first camera 101, the storage unit 102, the image identification unit 103, the mask change unit 104, the mask identification unit 105, the identification model change unit 106, the output unit 107, and the input unit 109. Note that the image identification device included in the image identification system 1B may be connected to the light emitting unit 108 illustrated in FIG. 1. More specifically, for example, the mask identification unit 105 may be connected to the light emitting unit 108.

Further, in the fourth modification of the first embodiment, the multi-pinhole mask 301a includes a spatial light modulator 520 capable of arbitrarily changing the position and size of a hole. The mask change unit 104 changes the position and size of the hole of the multi-pinhole mask 301a. Such a multi-pinhole mask 301a can be achieved by the spatial light modulator such as liquid crystal on silicon (LCOS) or a spatial light phase modulator.

The mask change unit 104 changes the mask pattern of a mask.

The input unit 109 receives an input for changing the mask pattern of the mask from the user. A user inputs the positions and sizes of the plurality of pinholes of the multi-pinhole mask 301a to the input unit 109. For example, the input unit 109 may receive selection of one mask pattern from among a plurality of mask patterns from the user. The user may select one mask pattern from the plurality of mask patterns.

The mask change unit 104 instructs the first camera 101 to change the mask pattern of the multi-pinhole mask 301a in accordance with the positions and sizes of the plurality of pinholes received by the input unit 109. The spatial light modulator 520 included in the first camera 101 changes the positions and sizes of the plurality of pinholes in response to the instruction from the mask change unit 104.

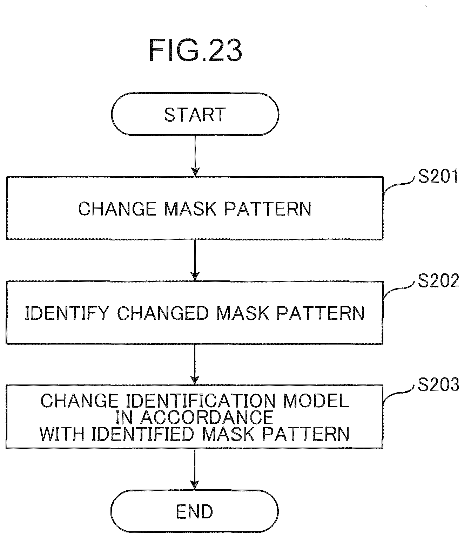

FIG. 23 is a flowchart illustrating one example of a procedure of main processing of the image identification system 1B at a time when a mask pattern is changed in the fourth modification of the first embodiment.

First, the mask change unit 104 changes the mask pattern of the first camera 101 (step S201). The mask change unit 104 notifies the mask identification unit 105 of the changed mask pattern, that is, the positions and sizes of the plurality of pinholes.

Next, the mask identification unit 105 identifies the mask pattern of the mask of the first camera 101 (step S202). The mask identification unit 105 identifies the mask pattern of the mask based on the changed mask pattern notified from the mask change unit 104.

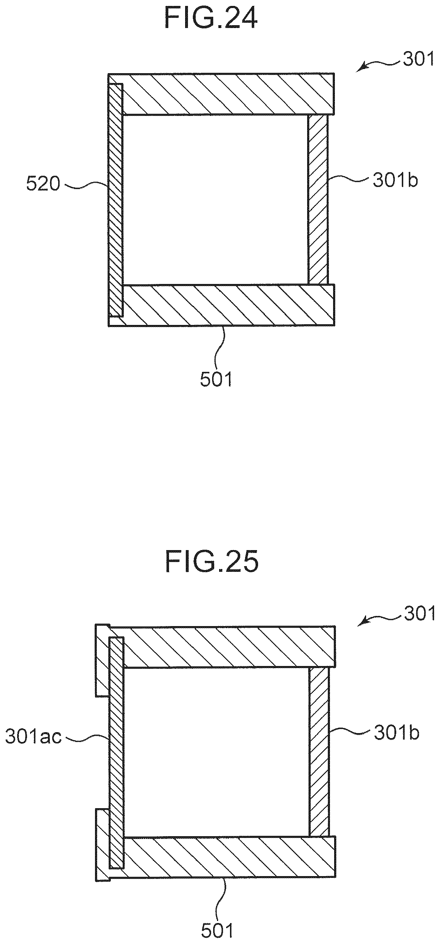

FIG. 24 is a schematic diagram illustrating a cross section of the multi-pinhole camera 301 in the fourth modification of the first embodiment. The multi-pinhole camera 301 uses the spatial light modulator 520 to arbitrarily set the transmittance of each position in the mask. In FIG. 24, the same components as those in FIG. 21 are denoted by the same reference numerals, and description thereof is omitted. The spatial light modulator 520 is made of a liquid crystal or the like, and can change the transmittance for each pixel. The spatial light modulator 520 functions as the multi-pinhole mask 301a. The transmittance is changed by a spatial light modulator controller (the mask change unit 104). Thus, when the user selects an arbitrarily pattern from a plurality of transmittance patterns prepared in advance, various mask patterns (multi-pinhole patterns) can be implemented.

Furthermore, the mask change unit 104 may change the mask pattern by applying an external force to the multi-pinhole mask 301a to deform the mask. The multi-pinhole camera 301 configured so that the mask is deformed by application of an external force in a fifth modification of the first embodiment will be described with reference to FIGS. 25 to 31. Note that the configuration of the image identification system according to the fifth modification of the first embodiment is the equal to the configuration of the image identification system 1B according to the fourth modification of the first embodiment.

FIG. 25 is a schematic diagram illustrating a cross section of the multi-pinhole camera 301 in the fifth modification of the first embodiment. In the multi-pinhole camera 301 in the fifth modification of the first embodiment, the mask is deformed by application of an external force. In FIG. 25, the same components as those in FIG. 21 are denoted by the same reference numerals, and description thereof is omitted.

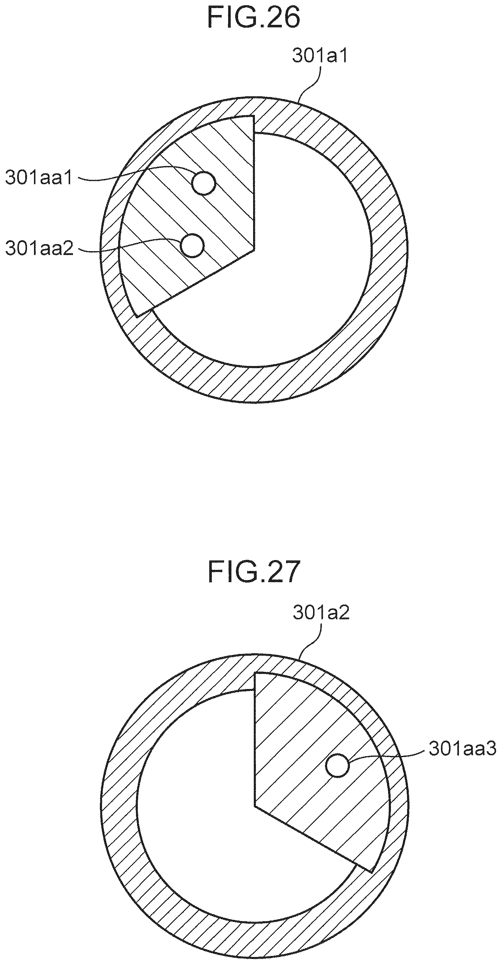

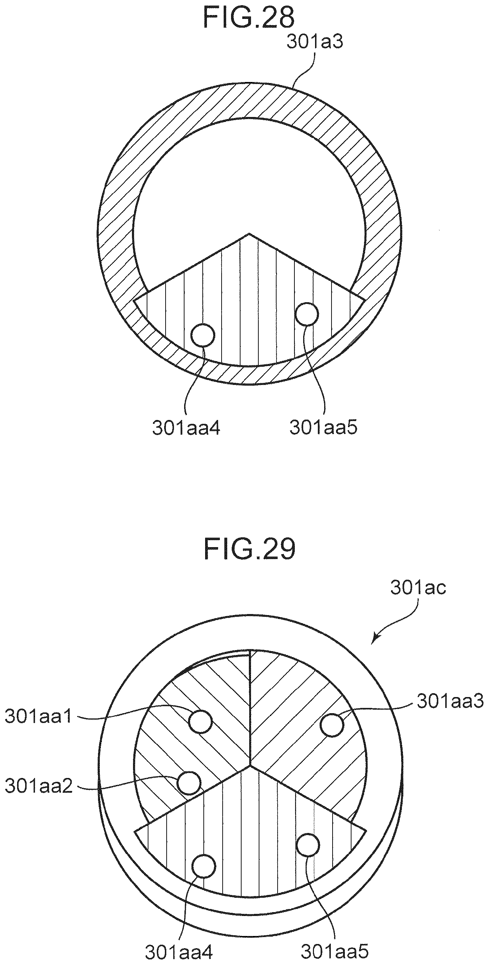

FIG. 26 is a schematic diagram illustrating one example of a first mask 301a1 constituting a multi-pinhole mask 301ac according to the fifth modification of the first embodiment, FIG. 27 is a schematic diagram illustrating one example of a second mask 301 a2 constituting the multi-pinhole mask 301ac according to the fifth modification of the first embodiment, and FIG. 28 is a schematic diagram illustrating one example of a third mask 301 a3 constituting the multi-pinhole mask 301ac according to the fifth modification of the first embodiment.

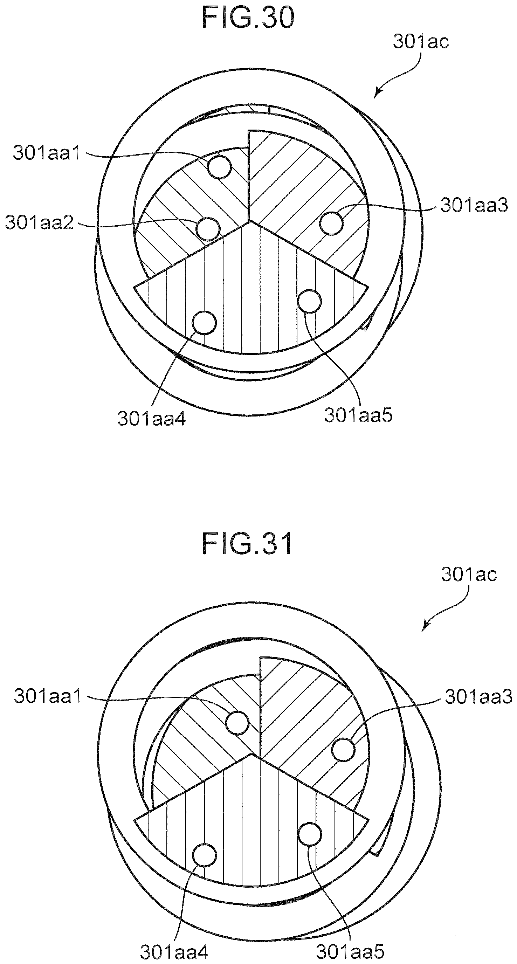

FIG. 29 is a schematic diagram illustrating one example of the multi-pinhole mask 301 ac configured by overlaying the first mask 301a1, the second mask 301a2, and the third mask 301a3 in the fifth modification of the first embodiment. FIG. 30 is a schematic diagram illustrating one example of the multi-pinhole mask 301ac in a case where an external force is applied to the multi-pinhole mask 301ac in the fifth modification of the first embodiment. FIG. 31 is a schematic diagram illustrating one example of the multi-pinhole mask 301ac in a case where an external force is further applied to the multi-pinhole mask 301ac in the fifth modification of the first embodiment.

The multi-pinhole mask 301ac has a configuration where the first mask 301a1, the second mask 301a2, and the third mask 301a3 are overlaid. The multi-pinhole camera 301, which is one example of the first camera 101, has a drive unit that independently applies an external force to each of the first mask 301a1, the second mask 301a2, and the third mask 301a3. Here, each mask has a shape in which a fan shape and a circular ring are combined. As a matter of course, this configuration is one example, and the shape is not limited to the fan shape, and the number of the plurality of masks constituting the multi-pinhole mask 301ac is not limited to 3. Each mask has one or a plurality of pinholes. Further, the mask may have no pinhole.

The first mask 301a1 has two pinholes 301aa1 and 301aa2. The second mask 301a2 has one pinhole 301aa3. The third mask 301a3 has two pinholes 301aa4 and 301aa5. The drive unit moves these three masks with application of an external force to create various mask patterns.

The mask change unit 104 instructs the first camera 101 to change the mask pattern of the multi-pinhole mask 301ac in accordance with the number and positions of the plurality of pinholes received by the input unit 109. The drive unit included in the first camera 101 applies an external force to the plurality of masks in response to the instruction from the mask change unit 104 to change the number and positions of the plurality of pinholes of the multi-pinhole mask 301ac.

FIGS. 29, 30, and 31 illustrate three types of multi-pinhole masks 301ac including the first mask 301a1, the second mask 301a2, and the third mask 301a3. The multi-pinhole masks 301ac illustrated in FIGS. 29 and 30 have five pinholes, and the multi-pinhole mask 301ac illustrated in FIG. 31 has four pinholes. This kind of drive unit for a mask can be fabricated by using an ultrasonic motor or a linear motor widely used in autofocus or the like.

As described above, the multi-pinhole mask 301ac can be changed in number and positions of pinholes by application of an external force. For example, when an external force is applied to the multi-pinhole mask 301ac illustrated in FIG. 29, the positions of the pinholes 301aa1, 301aa2, and 301aa3 change as illustrated in FIG. 30. Further, when an external force is further applied to the multi-pinhole mask 301ac illustrated in FIG. 29, the pinhole 301aa2 is shielded by the third mask 301a3. As a result, as illustrated in FIG. 31, the number of pinholes in the multi-pinhole mask 301ac is changed to 4.

Certainly, the mask change unit 104 may change not only the number or positions of the plurality of pinholes of the multi-pinhole mask but also the sizes of the plurality of pinholes.

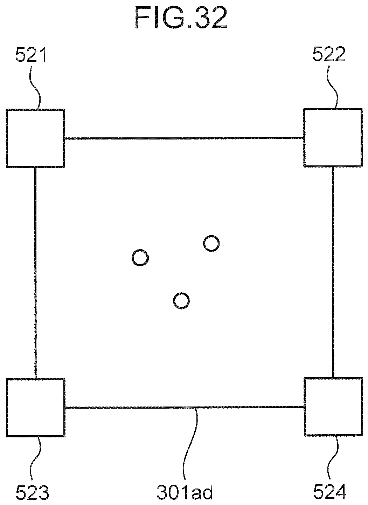

FIG. 32 is a schematic diagram for explaining a configuration of a multi-pinhole mask 301ad in a sixth modification of the first embodiment. The configuration of the multi-pinhole mask 301ad in the multi-pinhole camera 301 is a configuration where the mask is deformed by applying an external force.

The multi-pinhole mask 301ad has a plurality of pinholes and is made of a material having elasticity. The multi-pinhole mask 301ad has, for example, three pinholes. The multi-pinhole camera 301, which is one example of the first camera 101, has a plurality of independently controllable drive units 521 to 524. As a matter of course, the number of drive units does not need to be four. The mask change unit 104 can change the positions or sizes of the plurality of pinholes in the multi-pinhole mask 301ad by moving each drive unit.

The mask change unit 104 instructs the first camera 101 to change the mask pattern of the multi-pinhole mask 301ad in accordance with the positions and sizes of the plurality of pinholes received by the input unit 109. Each of the drive units included in the first camera 101 applies an external force to the multi-pinhole mask 301ad in response to the instruction from the mask change unit 104 to change the positions and sizes of the plurality of pinholes of the multi-pinhole mask 301ad.

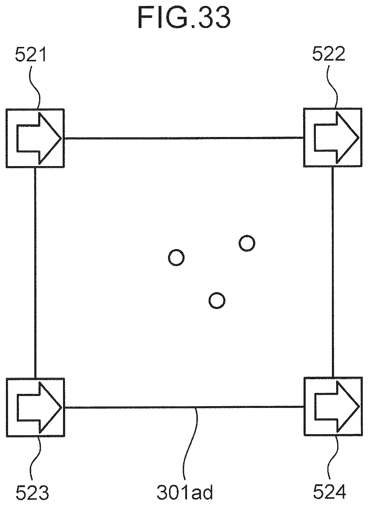

FIG. 33 is a schematic diagram illustrating a state of the multi-pinhole mask 301ad in a case where the four drive units 521 to 524 are moved in one direction in the sixth modification of the first embodiment. In FIG. 33, directions of arrows of the respective drive units 521 to 524 indicate the drive directions of the respective drive units 521 to 524. In this case, the drive directions of the drive units 521 to 524 are equal to each other. Therefore, the multi-pinhole mask 301ad moves parallel with the drive direction. As a result, the three pinholes of the multi-pinhole mask 301ad also move parallel with the drive direction.

Note that the number and positions of the plurality of pinholes of the multi-pinhole mask 301ad may be changed by moving the multi-pinhole mask 301ad parallel with the drive direction. For example, the number of pinholes may increase as the pinholes outside the imaging range move into the imaging range, and the number of pinholes may decrease as the pinholes within the imaging range move out of the imaging range.

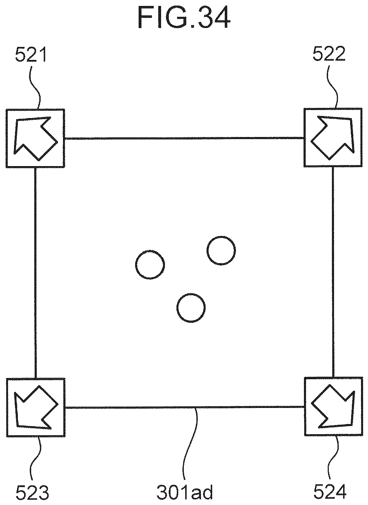

On the other hand, FIG. 34 is a schematic diagram illustrating a state of the multi-pinhole mask 301ad in a case where the four drive units 521 to 524 are moved in an outward direction from a central part of the multi-pinhole mask 301ad in the sixth modification of the first embodiment. In this case, since the multi-pinhole mask 301ad is stretched in accordance with elasticity, the pinholes are each increased in size. Such drive units 521 to 524 can be fabricated by using an ultrasonic motor or a linear motor widely used in autofocus or the like. As described above, the multi-pinhole mask 301ad can be changed in positions or sizes of pinholes by application of an external force.

Note that in the first embodiment, the user overlays the plurality of masks of the multi-pinhole mask, but the present disclosure is not particularly limited thereto. The multi-pinhole camera 301 may include a drive unit that inserts at least one of the plurality of masks into the front of the image sensor 301b or removes at least one of the plurality of masks from the front of the image sensor 301b. In this case, the mask change unit 104 may control the drive unit in response to an instruction from the input unit 109 to change the number of masks constituting the multi-pinhole mask. For example, in a case where the multi-pinhole mask 301a includes the three masks 400a to 400c illustrated in FIGS. 5 to 7, the drive unit may move at least one of the mask 400b and the mask 400c. Then, the mask change unit 104 may cause the drive unit to move at least one of the mask 400b and the mask 400c in accordance with the mask pattern to be changed. The mask change unit 104 may change the mask pattern of the multi-pinhole mask 301a by inserting at least one of the two masks 400b and 400c into front of the image sensor 301b or removing it from the front of the image sensor 301b.

Further, in the first embodiment, the user rotates a rotatable mask among the plurality of masks of the multi-pinhole mask, but the present disclosure is not particularly limited thereto. The multi-pinhole camera 301 may include a drive unit that rotates at least one of the plurality of masks. In this case, the mask change unit 104 may cause the drive unit in response to an instruction from the input unit 109 to rotate at least one of the plurality of masks constituting the multi-pinhole mask. For example, in a case where the multi-pinhole mask 301a includes the rotatable mask 400d illustrated in FIG. 8 and the non-rotating mask 400e illustrated in FIG. 9, the drive unit may rotate the mask 400d. Then, the mask change unit 104 may cause the drive unit to rotate the mask 400d at a rotation angle corresponding to the mask pattern to be changed. The mask change unit 104 may change the mask pattern of the multi-pinhole mask 301a by rotating the mask 400d of the two masks 400d and 400e.

The mask identification unit 105 may identify the mask pattern of the mask by acquiring a point spread function (PSF) of the multi-pinhole mask 301a from the image captured by the first camera 101. The PSF is a transfer function of the first camera 101 such as a multi-pinhole camera or a coded aperture camera, and is expressed by the following formula (1).

$$y = k * x \ldots (1)$$

In Formula (1), y represents a blurred computational image captured by the first camera 101, k represents a PSF, and x represents a normal image obtained by a normal camera imaging without blurring imaging a scene captured by the first camera 101. Further, * represent a convolution operator.

The mask identification unit 105 acquires mask information about the mask pattern from the computational image captured by the first camera 101, and identifies the mask pattern of the mask based on the acquired mask information. The mask identification unit 105 acquires a point spread function as the mask information from the image including the light emitting unit 108, the image being captured by the first camera 101.

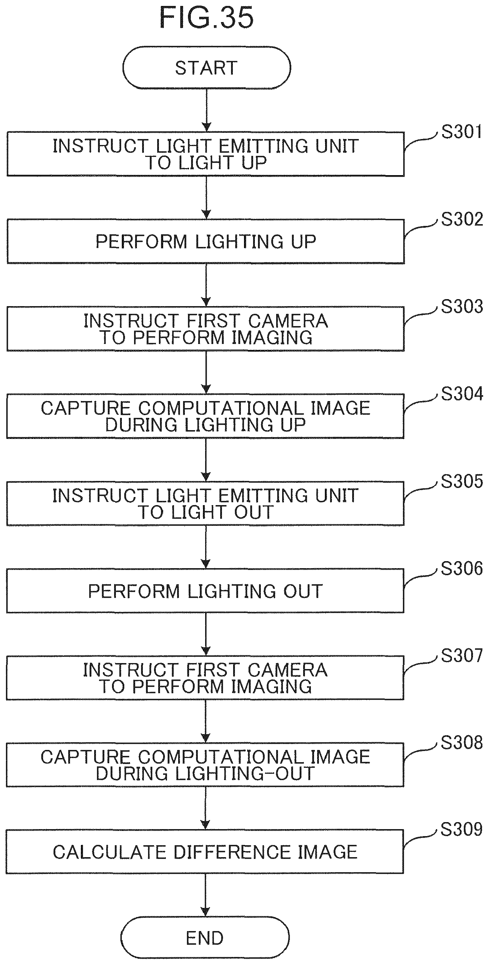

FIG. 35 is a flowchart illustrating one example of a procedure of main processing of the mask identification unit 105 according to the first embodiment.

First, the mask identification unit 105 instructs the light emitting unit 108 existing in the imaging environment to light up (step S301). The light emitting unit 108 is a light source that can be regarded as a point light source existing in the environment, and is a light emitting diode (LED) mounted on an electric apparatus or an LED for illumination, for example. In addition, the light emitting unit 108 may emit only a part of light of a monitor such as an LED monitor.

Next, the light emitting unit 108 performs lighting in response to a lighting instruction from the mask identification unit 105 (step S302).

Next, the mask identification unit 105 instructs the first camera 101 to perform imaging (step S303). As a result, the first camera 101 can image the lit light emitting unit 108.

Next, in response to the imaging instruction from the mask identification unit 105, the first camera 101 captures a computational image during lighting-up (step S304). The computational image obtained by imaging the lit light emitting unit 108 is input from the first camera 101 to the mask identification unit 105. The mask identification unit 105 acquires the computational image obtained by imaging the lit light emitting unit 108 from the first camera 101. The mask identification unit 105 temporarily stores the acquired computational image.

Next, the mask identification unit 105 instructs the light emitting unit 108 as a light source to light up (step S305).

Next, the light emitting unit 108 lights out in response to the lighting-out instruction from the mask identification unit 105 (step S306).

Next, the mask identification unit 105 instructs the first camera 101 to perform imaging (step S307). As a result, the first camera 101 can image the lit-out light emitting unit 108.

Next, in response to the lighting-out instruction from the mask identification unit 105, the first camera 101 captures a computational image during the lighting-out (step S308). The computational image obtained by imaging the lit-out light emitting unit 108 is input from the first camera 101 to the mask identification unit 105. The mask identification unit 105 acquires the computational image obtained by imaging the lit-out light emitting unit 108 from the first camera 101. The mask identification unit 105 temporarily stores the acquired computational image.

Next, the mask identification unit 105 calculates a difference image between the computational image during the lighting-up of the light emitting unit 108 and the computational image during the lighting-out of the light emitting unit 108 (step S309).

The image during the lighting-up of the light emitting unit 108 and the image during the lighting-out of the light emitting unit 108 are desirably captured in a time difference as little as possible. Calculating the difference image between the image during lighting-up of the light emitting unit 108 and the image during lighting-out of the light emitting unit 108 as described above enables acquiring a PSF being an image of only the light emitting unit 108 in a lighting-on state without being affected by a subject in the environment.

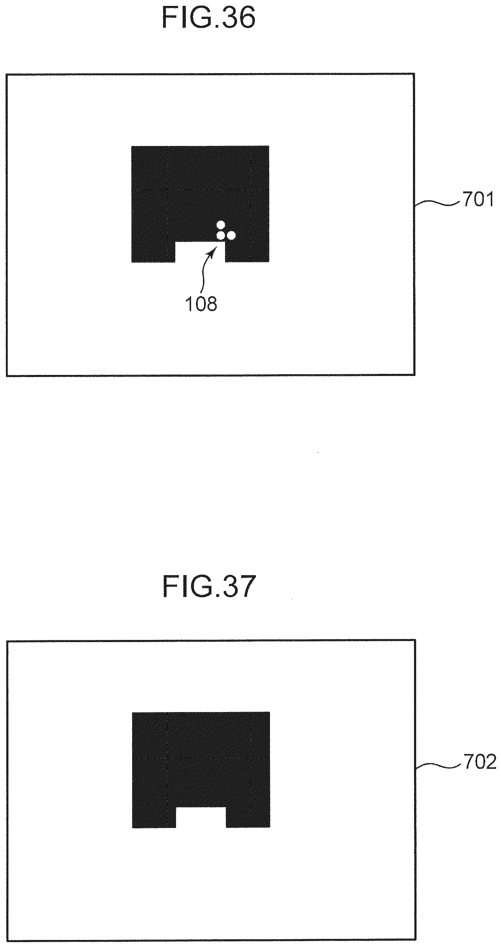

Next, processing of the mask identification unit 105 that identifies the mask pattern using the PSF will be described with reference to FIGS. 36 to 38. The first camera 101 performs imaging in synchronization with the light emitting unit 108 which is a light source regarded as a point light source existing in the imaging environment.

FIG. 36 is a diagram illustrating one example of a computational image 701 obtained by the first camera 101 imaging the light emitting unit 108 in the lighting-up state in the first embodiment. In the computational image 701, it can be seen that the luminance value of a pixel corresponding to the light emitting unit 108 is high. Note that, although one light emitting unit 108 lights up, the computational image 701 is an image where a plurality of pinhole images are superimposed, and thus includes three light emitting points corresponding to one light emitting unit 108.

FIG. 37 is a diagram illustrating one example of a computational image 702 obtained by the first camera 101 imaging the light emitting unit 108 in the lighting-out state in the first embodiment. In the computational image 702, it can be seen that the luminance value of the pixel corresponding to the light emitting unit 108 is lower than the luminance value during the lighting-up.

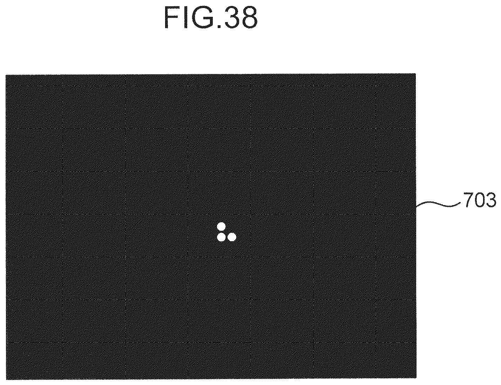

FIG. 38 is a diagram illustrating one example of a difference image 703 obtained by subtracting the computational image 702 including the light emitting unit 108 in the lighting-out state from the computational image 701 including the light emitting unit 108 in the lighting-up state. Since the difference image 703 is not affected by a subject other than the light emitting unit 108 and is an image obtained by imaging only the light emitting unit 108 which is a point light source, it can be seen that the PSF of the multi-pinhole mask 301a during the lighting-up of the light emitting unit 108 can be acquired. The difference image 703 represents the PSF of the multi-pinhole mask 301a.

Further, the light emitting unit 108 may be a light of a smartphone or a mobile phone of a user. In this case, lighting up or off the light as the light emitting unit 108 may be implemented by the user operating a smartphone or a mobile phone.

Furthermore, the mask identification unit 105 may identify the mask pattern by acquiring a light transport matrix (LTM), which is a transport function used in the light-field camera, instead of acquiring the point spread function of the multi-pinhole mask 301a from the image captured by the first camera 101. In this case, the mask identification unit 105 may use the plurality of light emitting units 108 dispersedly disposed in the environment, acquire the PSF at the plurality of positions, and set the PSF as the LTM.

Further, in a case where the mask identification unit 105 identifies the mask pattern by acquiring the LTM of the multi-pinhole mask 301a from the image captured by the first camera 101, the PSFs at a plurality of positions may be acquired using the plurality of light emitting units 108, and the PSFs may be set as the LTM.

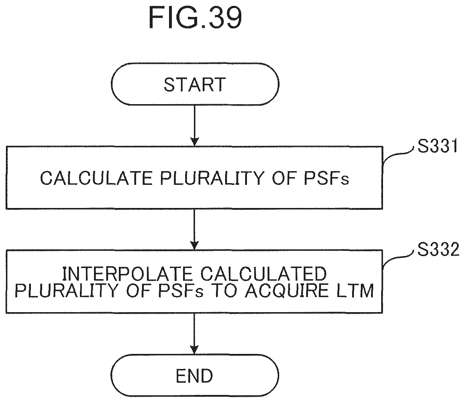

FIG. 39 is a flowchart illustrating one example of a procedure of main processing of the mask identification unit 105 in a case where a mask pattern is identified by acquiring a LTM from the image captured by the first camera 101.

First, the mask identification unit 105 calculates a plurality of PSFs respectively corresponding to the plurality of light emitting units 108 (step S331). As described above, this may be calculated using the difference image between a computational image during the lighting-up of the plurality of light emitting units 108 and a computational image during the lighting-out of the plurality of light emitting units 108. This processing enables acquiring the PSFs at a plurality of positions on the image.

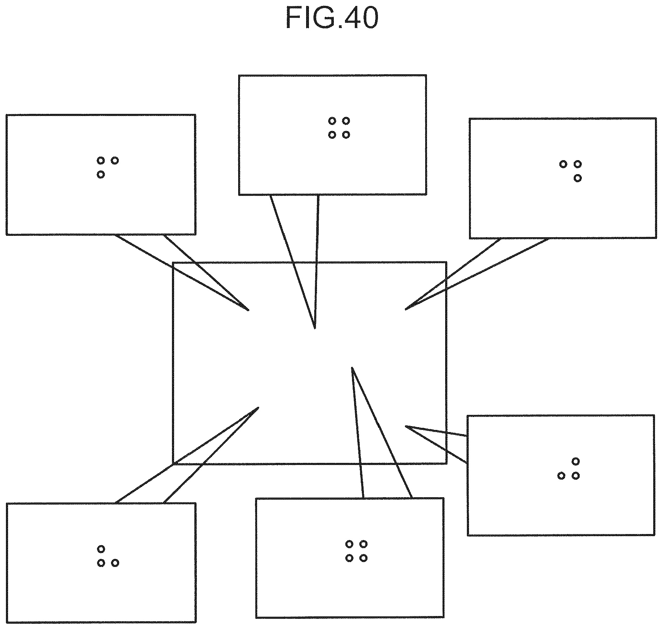

FIG. 40 is a schematic diagram illustrating one example of the plurality of PSFs acquired at a plurality of positions on an image. In FIG. 40, the PSFs are acquired at 6 points on the image.

Next, the mask identification unit 105 acquires the LTM by interpolating the calculated plurality of PSFs (step S332). The mask identification unit 105 calculates the PSFs in all the pixels of the image by performing the interpolation processing on the calculated plurality of PSFs, and sets the PSFs as the LTM. Such interpolation processing may use general image processing such as morphing.

Furthermore, in a case where the mask identification unit 105 identifies the mask pattern using the LTM, the image identification system may include one light emitting unit 108 instead of the plurality of light emitting units 108. The one light emitting unit 108 may be used at a plurality of positions. This processing may be implemented by using a light of a smartphone or a mobile phone as the light emitting unit 108, and lighting up and out the one light emitting unit 108 while a user changes its location, for example. Alternatively, an LED mounted on a drone or a vacuum cleaner robot may be used as the light emitting unit 108.

Further, the mask identification unit 105 may determine the state of the image quality of the mask information acquired based on the computational image captured by the first camera 101, and switch contents of the processing in accordance with the determination result. The mask information is a PSF.

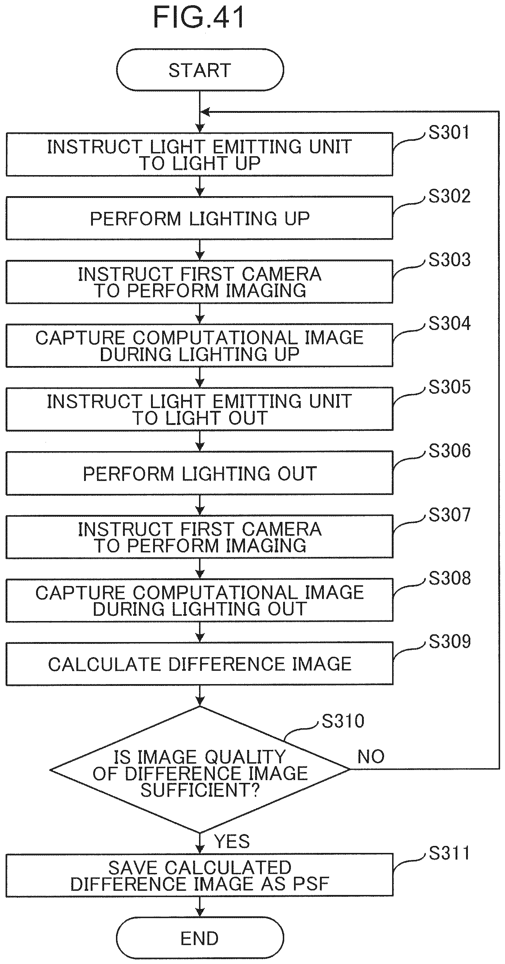

FIG. 41 is a flowchart illustrating one example of a procedure of another main processing of the mask identification unit 105 according to the first embodiment.

First, the mask identification unit 105 calculates the difference image between the computational image during the lighting-up of the light emitting unit 108 and the computational image during the lighting-out using the method similar to steps S301 to S309 in FIG. 35 described above. The mask identification unit 105 uses the first camera 101 to acquire the difference image as a PSF.

Next, the mask identification unit 105 checks the image quality of the calculated difference image and determines whether the image quality of the calculated difference image is sufficient (step S310). Here, in a case where a determination is made that the image quality of the difference image is not sufficient, that is, the image quality of the difference image is insufficient (NO in step S310), the processing returns to step S301, and the mask identification unit 105 instructs the light emitting unit 108 to light up. The mask identification unit 105 instructs the light emitting unit 108 to light up, instructs the first camera 101 to image the light emitting unit 108 in the lighting-up state, instructs the light emitting unit 108 to light off, and instructs the first camera 101 to image the light emitting unit 108 in the lighting-out state. In step S309, the mask identification unit 105 calculates a new difference image between the computational image during the lighting-up of the light emitting unit 108 and the computational image during the lighting-out of the light emitting unit 108, and then performs the processing in step S310 again.

On the other hand, in a case where the determination is made that the image quality of the difference image is sufficient (YES in step S310), the mask identification unit 105 stores the calculated difference image as a PSF (step S311).

The determination may be made whether the image quality of the PSF is sufficient using, for example, a difference image. The PSF needs to show nothing except for the point light source. Therefore, the difference image between the lighting-up state and the lighting-out state is used. Unfortunately, in a case where there is a change in scene such as a large movement of a person or a dramatic change in brightness in the environment between the imaging during the lighting-up and the imaging during the lighting-out, the change appears in the difference image, and thus an accurate PSF cannot be acquired. Therefore, the mask identification unit 105 may count the number of pixels having luminance of a certain value or more in the difference image, and may determine that the image quality of the difference image is insufficient in a case where the counted number of pixels is a threshold or more. Further, the mask identification unit 105 may determine that the image quality of the difference image is sufficient in a case where the counted number of pixels is smaller than the threshold.

Note that, in step S310, the mask identification unit 105 may determine whether the image quality of the calculated difference image is an allowable value or more. The mask identification unit 105 may count the number of pixels having luminance of the certain value or more in the difference image, and may determine that the image quality of the difference image is smaller than the allowable value in a case where the counted number of pixels is the threshold or more. Furthermore, in a case where the counted number of pixels is smaller than the threshold, the mask identification unit 105 may determine that the image quality of the difference image is the allowable value or more.

Further, in a case where the setting of the first camera 101 is inappropriate, the image quality of the difference image may be degraded. For example, in a case where the exposure time of the first camera 101 is too short or the gain of signal amplification for adjusting the brightness of image data is too small, the luminance of the light emitting unit 108 is buried in noise, and the image quality of the difference image (PSF) may be deteriorated. Conversely, in a case where the exposure time of the first camera 101 is too long or the gain is too great, the luminance value of a high luminance region in the image exceeds an upper limit value of the sensing range and is saturated, and thus the image quality of the difference image (PSF) may be deteriorated.

Therefore, the mask identification unit 105 may check the maximum luminance value of the image during the lighting-up of the light emitting unit 108, and may determine that the image quality of the difference image (PSF) is insufficient in a case where the maximum luminance value is equal to or greater than the upper limit value or equal to or smaller than the lower limit value. In a case where the mask identification unit 105 determines the image quality of the difference image (PSF) based on whether the maximum luminance value is equal to or smaller than the lower limit value in the image during the lighting-up of the light emitting unit 108, a determination can be made whether the luminance of the light emitting unit 108 is buried in noise. Further, in a case where the mask identification unit 105 determines the image quality of the difference image (PSF) based on whether the maximum luminance value is equal to or greater than the upper limit value in the image during the lighting-up of the light emitting unit 108, a determination can be made whether the luminance of the light emitting unit 108 exceeds the sensing range and is saturated. In a case where the luminance of the light emitting unit 108 is buried in noise or the luminance of the light emitting unit 108 is saturated, the mask identification unit 105 may change the setting of the first camera 101 so that the maximum luminance value falls within a predetermined range between the upper limit value and the lower limit value.

Note that, the mask identification unit 105 may check the maximum luminance value of the image during the lighting-out of the light emitting unit 108, and may determine that the image quality of the difference image (PSF) is insufficient in a case where the maximum luminance value is equal to or greater than the upper limit value or equal to or smaller than the lower limit value.

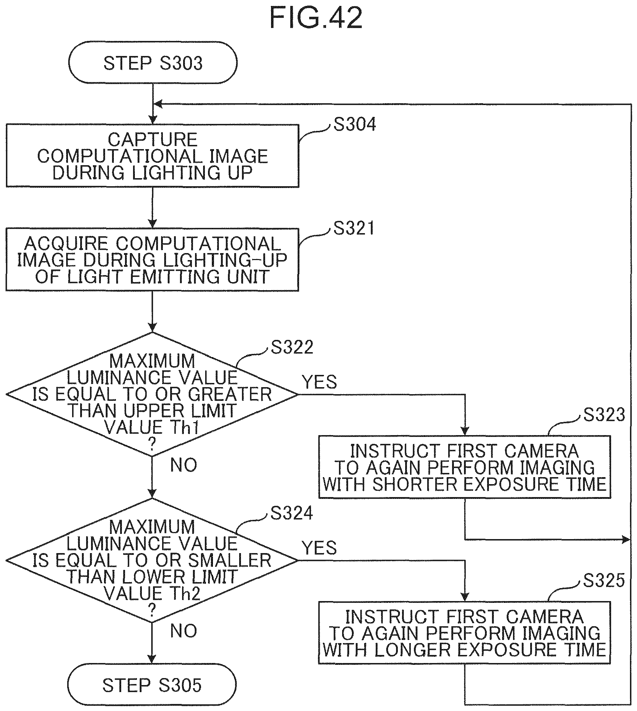

FIG. 42 is a flowchart illustrating one example of a procedure of image quality determination processing of the mask identification unit 105 according to the first embodiment. Note that the image quality determination processing illustrated in FIG. 42 is performed between step S303 and step S305 in FIG. 35.

The processing in step S304 in FIG. 42 is the same as in step S304 in FIG. 35.

Next, the mask identification unit 105 acquires a computational image captured by the first camera 101 during the lighting-up of the light emitting unit 108 (step S321).

Next, the mask identification unit 105 determines whether the maximum luminance value of the acquired computational image is equal to or greater than an upper limit value Th1 to determine whether the computational image is saturated (step S322). In a case where a determination is made that the maximum luminance value is equal to or greater than the upper limit value Th1, that is, a determination is made that the acquired computational image is saturated (YES in step S322), the mask identification unit 105 instructs the first camera 101 to again perform imaging with a shorter exposure time (step S323). The processing then returns to step S304.

On the other hand, in a case where a determination is made that the maximum luminance value is smaller than the upper limit value Th1 (NO in step S322), the mask identification unit 105 determines whether the maximum luminance value of the acquired computational image is equal to or smaller than a lower limit value Th2 to determine whether the luminance of the light emitting unit 108 is buried in noise (step S324). Note that the lower limit value Th2 is smaller than the upper limit value Th1.

In a case where a determination is made that the maximum luminance value is equal to or smaller than the lower limit value Th2, that is, a determination is made that the luminance of the light emitting unit 108 is buried in noise (YES in step S324), the mask identification unit 105 instructs the first camera 101 to again perform imaging with a longer exposure time (step S325). The processing then returns to step S304.

On the other hand, in a case where a determination is made that the maximum luminance value is greater than the lower limit value Th2 (NO in step S324), the mask identification unit 105 determines that the image quality of the acquired computational image is sufficiently high with the current exposure time. In this case, the processing proceeds to step S305, and the mask identification unit 105 instructs the light emitting unit 108 to light out. Then, the mask identification unit 105 further instructs the first camera 101 to perform imaging with the exposure time equal to in the imaging during the lighting-up of the light emitting unit 108, thereby acquiring a computational image during the lighting-out of the light emitting unit 108.

Note that as for the computational image acquired when the light emitting unit 108 lights up, the mask identification unit 105 may control the exposure time of the first camera 101 so that the maximum luminance value falls within the predetermined range between the upper limit value Th1 and the lower limit value Th2, as described above.

As a matter of course, the mask identification unit 105 may change the setting other than the exposure time of the first camera 101. For example, the mask identification unit 105 may change the gain of the first camera 101.

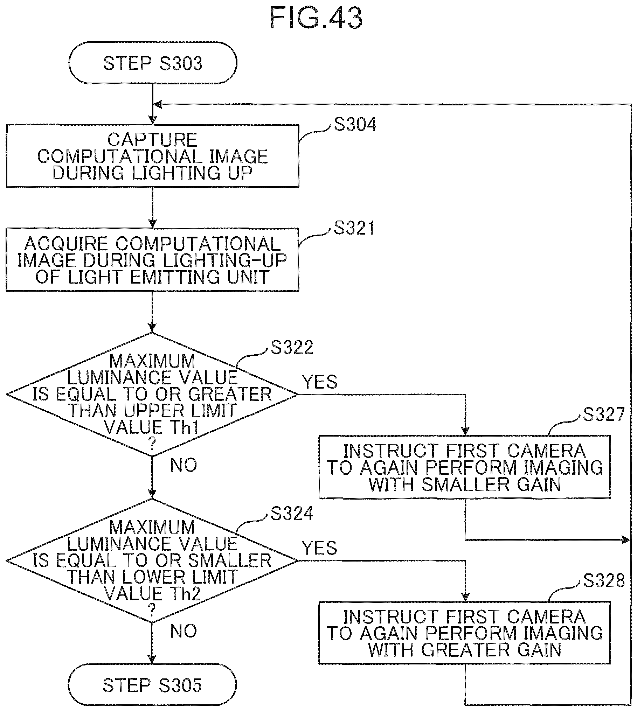

FIG. 43 is a flowchart illustrating another example of the procedure of the image quality determination processing of the mask identification unit 105 according to the first embodiment. In FIG. 43, the same processing as that in FIG. 42 is denoted by the same reference numeral, and description thereof will be omitted. Note that the image quality determination processing illustrated in FIG. 43 is performed between step S303 and step S305 in FIG. 35.

In a case where a determination is made in step S322 that the maximum luminance value is equal to or greater than the upper limit value Th1, that is, a determination is made that the acquired computational image is saturated (YES in step S322), the mask identification unit 105 instructs the first camera 101 to again perform imaging with a smaller gain (step S327). The processing then returns to step S304.

In a case where a determination is made in step S324 that the maximum luminance value is equal to or smaller than the lower limit value Th2, that is, a determination is made that the luminance of the light emitting unit 108 is buried in noise (YES in step S324), the mask identification unit 105 instructs the first camera 101 to again perform imaging with a greater gain (step S328).

The processing then returns to step S304.

On the other hand, in a case where a determination is made that the maximum luminance value is greater than the lower limit value Th2 (NO in step S324), the mask identification unit 105 determines that the image quality of the acquired computational image is sufficiently high with the current gain. In this case, the processing proceeds to step S305, and the mask identification unit 105 instructs the light emitting unit 108 to light out. Then, the mask identification unit 105 further instructs the first camera 101 to perform imaging with the exposure time and gain equal to in the imaging during the lighting-up of the light emitting unit 108, thereby acquiring a computational image during the lighting-out of the light emitting unit 108.

Note that as for the computational image acquired when the light emitting unit 108 lights out, the mask identification unit 105 may control the gain of the first camera 101 so that the maximum luminance value falls within the predetermined range between the upper limit value Th1 and the lower limit value Th2, as described above.

Further, the mask identification unit 105 may control the luminance of the light emitting unit 108 instead of the exposure time or gain of the first camera 101. That is, in a case where a determination is made that the luminance of the light emitting unit 108 is saturated, the mask identification unit 105 controls the light emitting unit 108 so that the luminance decreases. Conversely, in a case where a determination is made that the luminance of the light emitting unit 108 is buried in noise, the mask identification unit 105 controls the light emitting unit 108 so that the luminance increases. Increasing the luminance of the light emitting unit 108 increases a luminance difference between the light emitting unit 108 and the noise.

In a case where a determination is made that the image quality of the difference image is insufficient, the mask identification unit 105 may select another light emitting unit present in the target area and instruct the another light emitting unit to light up and light off. This configuration is effective for a light source having directivity because image quality inevitably deteriorates depending on a positional relationship between the first camera 101 and the light emitting unit 108.

(Second embodiment)

In the first embodiment, the mask identification unit 105 acquires mask information about the mask pattern from the computational image captured by the first camera 101, and identifies the mask pattern of the mask based on the acquired mask information. Conversely, in a second embodiment, the mask identification unit may identify a mask pattern by reading mask ID information described in a mask. This is implemented, for example, by reading mask ID information embedded around a mask. The mask ID information is, for example, a barcode, a two-dimensional code, color information, or the like.

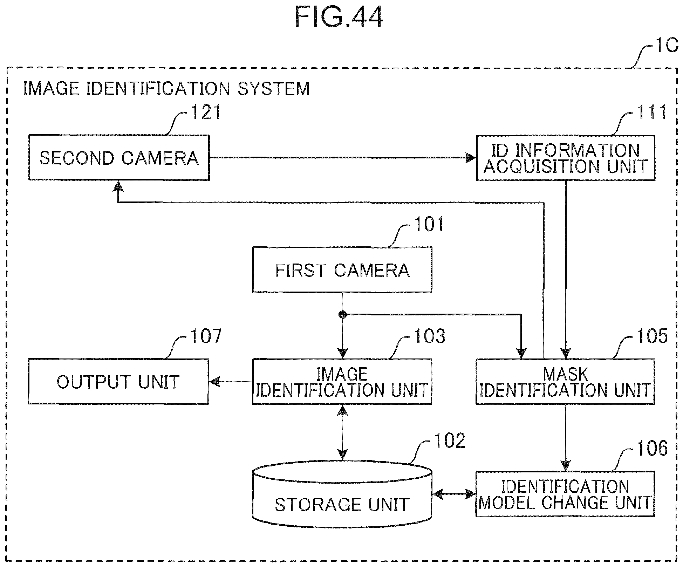

FIG. 44 is a block diagram showing one example of a configuration of an image identification system 1C according to the second embodiment of the present disclosure. Note that, in the image identification system 1C illustrated in FIG. 44, the same components as those of the image identification system 1 illustrated in FIG. 1 are denoted by the same reference numerals, and description thereof is omitted.

The image identification system 1C of the second embodiment includes a first camera 101, a storage unit 102, an image identification unit 103, a mask identification unit 105, an identification model change unit 106, an output unit 107, an ID information acquisition unit 111, and a second camera 121. The mask identification unit 105, the identification model change unit 106, the image identification unit 103, and the ID information acquisition unit 111 include a processor such as a CPU and a memory such as a semiconductor memory.

In addition, in a case where the ID information acquisition unit 111 transmits and receives information to and from second camera 121 via a wired or wireless network, the ID information acquisition unit 111 includes a reception unit. The reception unit includes a reception circuit as hardware. Further, in a case where the mask identification unit 105 transmits and receives information to and from the second camera 121 via a wired or wireless network, the mask identification unit 105 includes a transmission unit. The transmission unit includes a transmission circuit as hardware. On the other hand, the second camera 121 includes a transmission circuit and a reception circuit as hardware.

The image identification system 1C may include, for example, an image identification device including the storage unit 102, the image identification unit 103, the mask identification unit 105, the identification model change unit 106, and the ID information acquisition unit 111, and may be configured so that the first camera 101, the output unit 107, and the second camera 121 are be connected to the image identification device. In addition, the image identification device may be a server. Further, the image identification system 1C may include, for example, an image identification device including the first camera 101, the storage unit 102, the image identification unit 103, the mask identification unit 105, the identification model change unit 106, the output unit 107, and the ID information acquisition unit 111, and may be configured so that the second camera 121 is connected to the image identification device.

The Second camera 121 is a camera different from first camera 101, and captures an image without blurring. The second camera 121 is disposed on the subject side captured by the first camera 101. The first camera 101 is a multi-pinhole camera 301. The second camera 121 images a multi-pinhole mask 301a included in the multi-pinhole camera 301 on the subject side. The mask identification unit 105 instructs the second camera 121 to capture an image. The second camera 121 acquires an image obtained by imaging the multi-pinhole mask 301a on the subject side in response to the instruction from the mask identification unit 105.

The ID information acquisition unit 111 acquires mask ID information (mask identification information) for identifying a mask from an image captured by the second camera 121.

The mask identification unit 105 identifies a mask pattern of the mask based on the mask ID information acquired by the ID information acquisition unit 111.

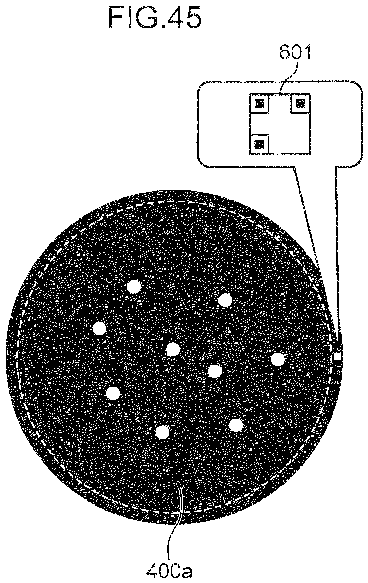

Processing of the mask identification unit 105 for acquiring mask ID information to identify a mask pattern will be described with reference to FIGS. 45 to 49. In the second embodiment, the multi-pinhole mask 301a is configured so that three masks 400a, 400b, and 400c described with reference to FIGS. 5 to 7 are overlaid. The three masks 400a, 400b, and 400c are improved.

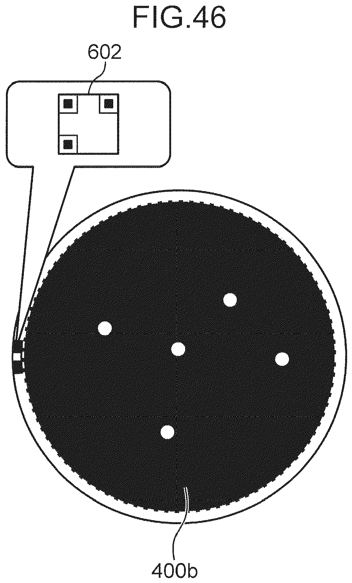

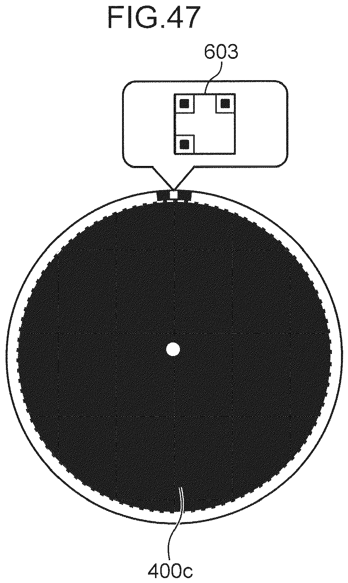

FIG. 45 is a diagram illustrating one example of the mask 400a having nine pinholes in the second embodiment, FIG. 46 is a diagram illustrating one example of the mask 400b having five pinholes in the second embodiment, and FIG. 47 is a diagram illustrating one example of the mask 400c having one pinhole in the second embodiment.

The multi-pinhole mask 301a is configured by overlaying the mask 400a illustrated in FIG. 45 where nine pinholes are formed, the mask 400b illustrated in FIG. 46 where five pinholes are formed, and the mask 400c illustrated in FIG. 47 where one pinhole is formed. Further, mask ID information 601 for identifying the mask 400a is described on an outer peripheral portion of the mask 400a illustrated in FIG. 45. Mask ID information 602 for identifying the mask 400b is described on an outer peripheral portion of the mask 400b illustrated in FIG. 46. Further, mask ID information 603 for identifying the mask 400c is described on an outer peripheral portion of the mask 400c illustrated in FIG. 47. The annular outer peripheral portions of the mask 400b and the mask 400c are transparent. The annular outer peripheral portion of the mask 400a is not transparent but is shielded. Furthermore, the circular inner peripheral portions of the mask 400a, the mask 400b, and the mask 400c are shielded, and have pinholes.

The mask ID information 601 to 603 is represented by, for example, a two-dimensional code. The ID information acquisition unit 111 acquires the mask ID information 601 to 603 about the masks 400a to 400c by reading the two-dimensional codes described respectively in the masks 400a to 400c included in a captured image. The two-dimensional codes respectively representing the mask ID information 601 to 603 may be printed respectively on the masks 400a to 400c, or may be affixed with a seal or the like.

Further, the mask identification unit 105 stores mask information corresponding one-to-one to the mask ID information 601, 602, and 603 in advance. The mask information corresponding to the mask ID information 601 is, for example, information about a PSF of the multi-pinhole mask 301a including only the mask 400a. In a case where the multi-pinhole mask 301a includes the mask 400a, the multi-pinhole mask 301a has nine pinholes as described above. Therefore, the mask information corresponding to the mask ID information 601 is the PSF of the mask 400a having nine pinholes.

The mask information corresponding to the mask ID information 602 is, for example, information about the PSF of the multi-pinhole mask 301a where the two masks 400a and 400b are overlaid. In a case where the multi-pinhole mask 301a includes the two masks 400a and 400b, the multi-pinhole mask 301a has five pinholes. Note that, in a case where the thicknesses of the masks 400a and 400b are sufficiently small, the mask information corresponding to the mask ID information 602 is the PSF of the mask 400b having five pinholes.

The mask information corresponding to the mask ID information 603 is, for example, information about the PSF of the multi-pinhole mask 301a where the three masks 400a, 400b, and 400c are overlaid. In a case where the multi-pinhole mask 301a includes the three masks 400a, 400b, and 400c, the multi-pinhole mask 301a has one pinhole. Note that, in a case where the thicknesses of the masks 400a, 400b, and 400c are sufficiently small, the mask information corresponding to the mask ID information 603 is the PSF of the mask 400c having one pinhole.

As described above, these masks are fixed with a detachable adhesive. A user manually removes each mask to change the mask pattern of the multi-pinhole mask 301a. Note that the mask change unit 104 may change the mask pattern of the multi-pinhole mask 301a by controlling the drive unit to replace each mask.

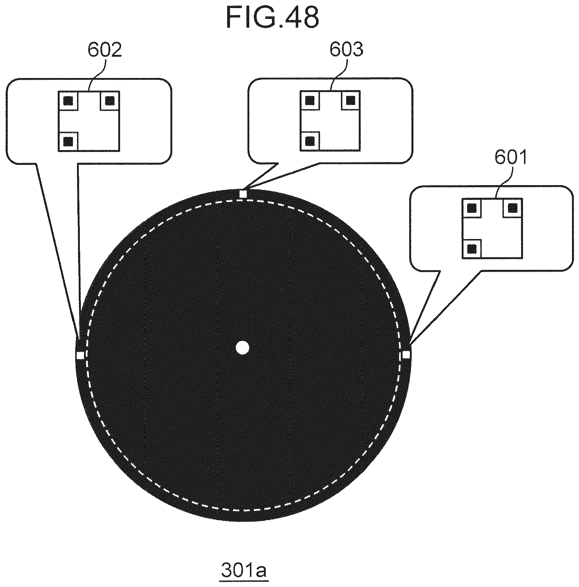

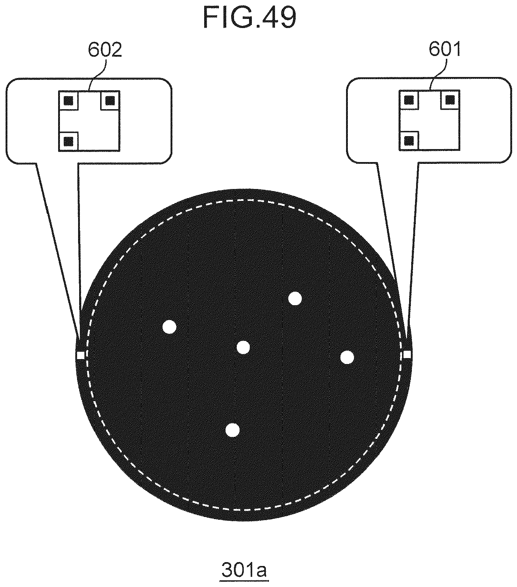

FIG. 48 is a diagram illustrating one example of the multi-pinhole mask 301a where the three masks 400a to 400c are overlaid in the second embodiment, and FIG. 49 is a diagram illustrating one example of the multi-pinhole mask 301a where the two masks 400a and 400b are overlaid in the second embodiment.

In a case where the second camera 121 images the multi-pinhole mask 301a where the three masks 400a, 400b, and 400c are overlaid, as illustrated in FIG. 48, two-dimensional codes on the outer peripheral portion of the multi-pinhole mask 301a respectively representing the mask ID information 601, 602, and 603 are imaged. Therefore, the mask identification unit 105 can identify that the multi-pinhole mask 301a where the three masks 400a to 400c are overlaid is mounted on the first camera 101 by acquiring the mask ID information 601, 602, and 603. When acquiring the three pieces of mask ID information 601, 602, and 603, the mask identification unit 105 acquires mask information corresponding to the mask ID information 603 from the memory. The mask information corresponding to the mask ID information 603 is the PSF of the mask having one pinhole.

In addition, in a case where the mask 400c is removed from the multi-pinhole mask 301a where the three masks 400a, 400b, and 400c are overlaid, the multi-pinhole mask 301a is configured by the two overlaid masks 400a and 400b. In a case where the second camera 121 images the multi-pinhole mask 301a where the two masks 400a and 400b are overlaid, as illustrated in FIG. 49, the two-dimensional codes on the outer peripheral portion of the multi-pinhole mask 301a respectively representing the mask ID information 601 and 602 are imaged. Therefore, the mask identification unit 105 can identify that the multi-pinhole mask 301a where the two masks 400a and 400b are overlaid is mounted on the first camera 101 by acquiring the mask ID information 601 and 602. When acquiring the two pieces of mask ID information 601 and 602, the mask identification unit 105 acquires mask information corresponding to the mask ID information 602 from the memory. The mask information corresponding to the mask ID information 602 is the PSF of the mask having five pinholes.

In addition, in a case where the mask 400b is removed from the multi-pinhole mask 301a where the two masks 400a and 400b are overlaid, the multi-pinhole mask 301a is configured only by the mask 400a. In a case where the second camera 121 images the multi-pinhole mask 301a having the mask 400a, as illustrated in FIG. 45, the two-dimensional code, which is on the outer peripheral portion of the multi-pinhole mask 301a and respectively represents the mask ID information 601 is imaged. Therefore, the mask identification unit 105 can identify that the multi-pinhole mask 301a having the mask 400a is mounted on the first camera 101 by acquiring the mask ID information 601. When acquiring only the mask ID information 601, the mask identification unit 105 acquires mask information corresponding to the mask ID information 601 from the memory. The mask information corresponding to the mask ID information 601 is the PSF of the mask having nine pinholes.

In order for the ID information acquisition unit 111 to acquire such mask ID information, the second camera 121 needs to acquire an image obtained by imaging the multi-pinhole mask 301a on the subject side.

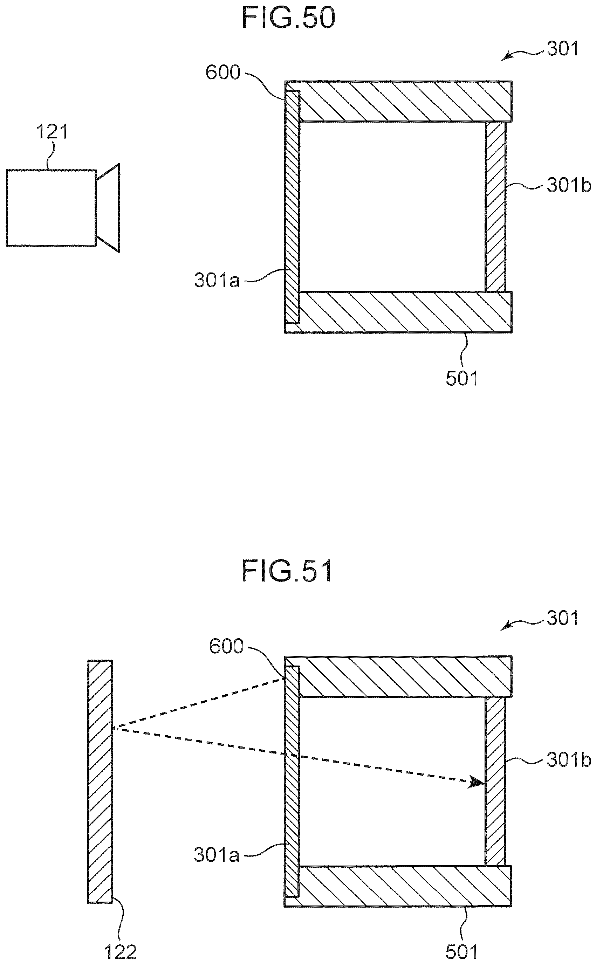

FIG. 50 is a diagram for describing a configuration of reading the mask ID information 600 described in a mask constituting the multi-pinhole mask 301a using the second camera 121 in the second embodiment. In FIG. 50, the same components as those in FIGS. 3 and 21 are denoted by the same reference numerals, and description thereof is omitted.

The second camera 121 is another camera different from the first camera 101, and is disposed on a subject side where the multi-pinhole camera 301 corresponding to the first camera 101 performs imaging. For example, second camera 121 captures an image without blurring. For example, the mask identification unit 105 can acquire an image obtained by imaging the multi-pinhole mask 301a on the subject side by instructing the second camera 121 to perform imaging. The captured image includes the mask ID information 600.

FIG. 51 is a diagram for describing a configuration of reading the mask ID information 600 described in a mask constituting the multi-pinhole mask 301a using a mirror 122 in a modification of the second embodiment. In FIG. 51, the same components as those in FIGS. 3 and 21 are denoted by the same reference numerals, and description thereof is omitted.

In the modification of the second embodiment, the mirror 122 is disposed instead of the second camera 121. In this case, the image identification system 1C does not include the second camera 121. The first camera 101 images the mirror 122 in which the multi-pinhole mask 301a having the mask ID information 600 described on the surface thereof is reflected. The ID information acquisition unit 111 acquires an image captured by the multi-pinhole camera 301 corresponding to the first camera 101. The ID information acquisition unit 111 acquires mask ID information from a computational image captured by the multi-pinhole camera 301.

The mirror 122 is disposed on the subject side where the multi-pinhole camera 301 corresponding to the first camera 101 performs imaging. The multi-pinhole mask 301a in which the mask ID information 600 is described is reflected in the mirror 122. When the mask identification unit 105 instructs the multi-pinhole camera 301 to perform imaging, the light emitted from the mask constituting the multi-pinhole mask 301a is reflected by the mirror 122 and then reaches the light receiving surface of the image sensor 301b. Therefore, the mask identification unit 105 can acquire an image obtained by imaging the multi-pinhole mask 301a on the subject side by instructing the multi-pinhole camera 301 to perform imaging.

Note that, since the image captured by the multi-pinhole camera 301 is a computational image with blurring, the ID information acquisition unit 111 needs to acquire the mask ID information from the computational image. Therefore, for example, the storage unit 102 may store in advance a mask ID identification model for identifying the mask ID information about the multi-pinhole mask 301a from the computational image captured by the multi-pinhole camera 301. The ID information acquisition unit 111 may identify the mask ID information from the image of the multi-pinhole mask 301a, the image being captured by the multi-pinhole camera 301, using the mask ID identification model. The ID information acquisition unit 111 may input the image captured by the multi-pinhole camera 301 to the mask ID identification model and acquire the mask ID information output as the identification result from the mask ID identification model. The mask ID identification model is created by learning processing performed by a learning device.

In a case where the mask ID identification model is constructed by a multilayer neural network, the learning device may create the mask ID identification model by performing machine learning with deep learning using, as teacher data, the image of the multi-pinhole mask 301a including the mask ID information, the image being captured by the normal camera, and annotation information corresponding to the mask ID information given to the image.

Note that the second camera 121 and the mirror 122 are necessary in a case where the ID information acquisition unit 111 reads the mask ID information 600, but are unnecessary in a case where the image identification unit 103 identifies an image captured by the first camera 101. For example, it is desirable to configure so that when the ID information acquisition unit 111 reads the mask ID information 600, the second camera 121 or the mirror 122 is installed on the subject side where the multi-pinhole camera 301 performs imaging, and the installed second camera 121 or mirror 122 is removed after the reading of the mask ID information 600 is completed.

(Third embodiment)

In a third embodiment, in a case where the user changes the mask pattern by rotating one of the plurality of masks instead of removing one of the plurality of masks, the mask identification unit 105 may recognize the rotation angle of the mask by reading marker information described on the mask and identify the mask pattern. In the third embodiment, the multi-pinhole mask 301a is configured so that two masks 400d and 400e described with reference to FIGS. 8 and 9 are overlaid. The two masks 400d and 400e are improved.

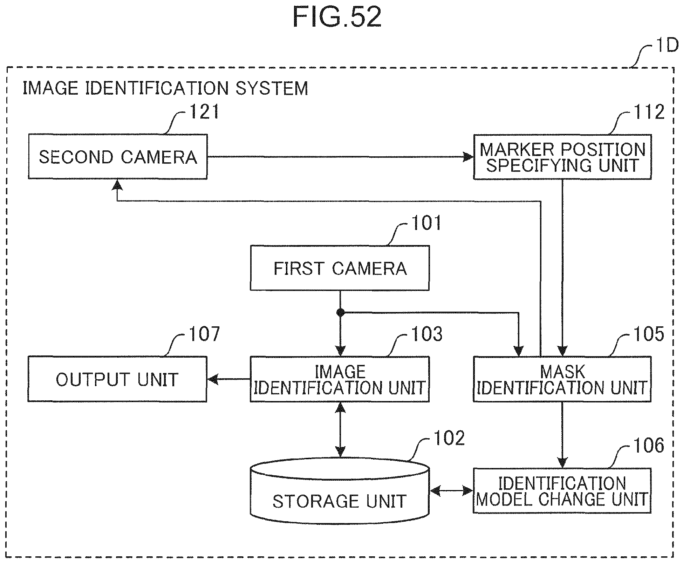

FIG. 52 is a block diagram illustrating one example of the configuration of an image identification system 1D according to the third embodiment of the present disclosure. Note that, in the image identification system 1D illustrated in FIG. 52, the same components as those of the image identification system 1C illustrated in FIG. 44 are denoted by the same reference numerals, and description thereof is omitted.

The image identification system 1D of the third embodiment includes a first camera 101, a storage unit 102, an image identification unit 103, a mask identification unit 105, an identification model change unit 106, an output unit 107, a marker position specifying unit 112, and a second camera 121. The mask identification unit 105, the identification model change unit 106, the image identification unit 103, and the marker position specifying unit 112 include a processor such as a CPU and a memory such as a semiconductor memory.

In addition, in a case where the marker position specifying unit 112 transmits and receives information to and from second camera 121 via a wired or wireless network, the marker position specifying unit 112 includes a reception unit. The reception unit includes a reception circuit as hardware. Further, in a case where the mask identification unit 105 transmits and receives information to and from the second camera 121 via a wired or wireless network, the mask identification unit 105 includes a transmission unit. The transmission unit includes a transmission circuit as hardware. On the other hand, the second camera 121 includes a transmission circuit and a reception circuit as hardware.

The image identification system 1D may include, for example, an image identification device including the storage unit 102, the image identification unit 103, the mask identification unit 105, the identification model change unit 106, and the marker position specifying unit 112, and may be configured so that the first camera 101, the output unit 107, and the second camera 121 are connected to the image identification device. In addition, the image identification device may be a server. Further, the image identification system 1D may include, for example, an image identification device including the first camera 101, the storage unit 102, the image identification unit 103, the mask identification unit 105, the identification model change unit 106, the output unit 107, and the marker position specifying unit 112, and may be configured so that the second camera 121 is connected to the image identification device.

The multi-pinhole mask 301a includes the mask 400d and the mask 400e overlaid on the mask 400d. The mask 400d is one example of a first mask, and the mask 400e is one example of a second mask.

The marker position specifying unit 112 specifies the positions of a plurality of markers formed on each of the mask 400d and the mask 400e in order to detect the rotation angle of the mask 400d with respect to the mask 400e.

The mask identification unit 105 detects the rotation angle of the mask 400d with respect to the mask 400e based on the positions of the plurality of markers specified by the marker position specifying unit 112, and identifies the mask pattern of the mask based on the detected rotation angle.

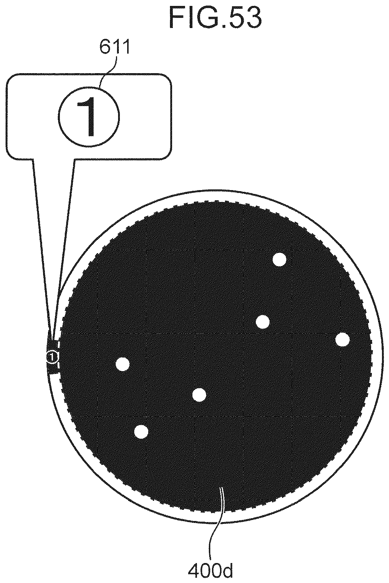

Processing for recognizing a rotation angle of one mask by reading identification information described in a plurality of masks constituting the multi-pinhole mask 301a and identifying a mask pattern based on the recognized rotation angle will be described with reference to FIGS. 53 to 55.

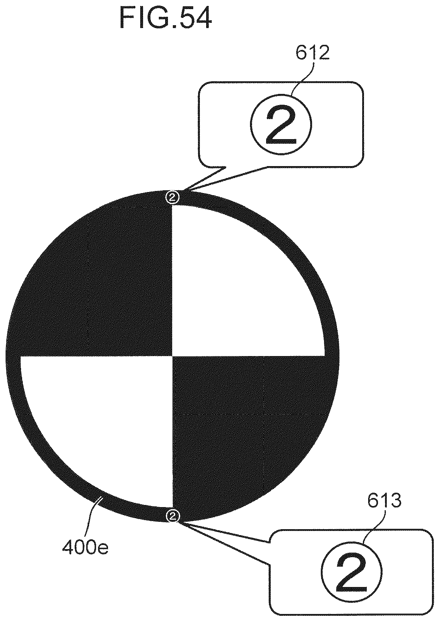

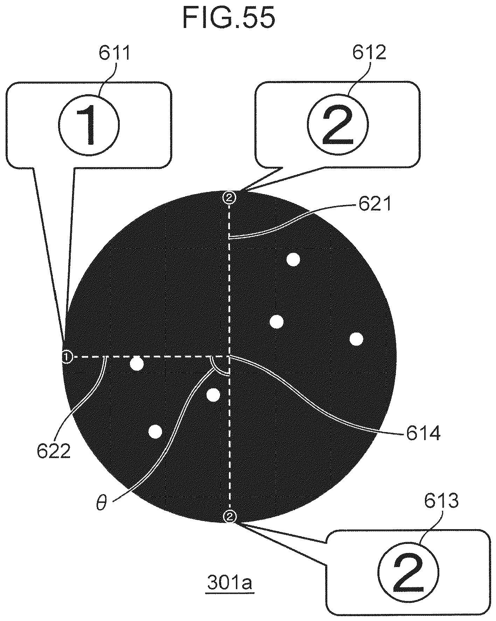

FIG. 53 is a diagram illustrating one example of the mask 400d having six pinholes in the third embodiment, FIG. 54 is a diagram illustrating one example of the mask 400e having two fan-shaped openings in the third embodiment, and FIG. 55 is a diagram illustrating one example of the multi-pinhole mask 301a where the two masks 400d and 400e are overlaid in the third embodiment.

As illustrated in FIG. 53, one marker 611 is described as identification information on the outer peripheral portion of the rotatable mask 400d. On the other hand, as illustrated in FIG. 54, two markers 612 and 613 are described as identification information on the outer peripheral portion of the fixed mask 400e. The annular outer peripheral portion of the mask 400d is transparent. The annular outer peripheral portion of the mask 400e is not transparent but is shielded. Furthermore, the circular inner peripheral portion of the mask 400d is shielded, and has a plurality of pinholes. The circular inner peripheral portion of the mask 400e has two fan-shaped openings and two fan-shaped shielding portions.

The marker 611 is formed at a predetermined position on the outer peripheral portion of the mask 400d. For example, the marker 611 is a number "1". The marker 612 is formed at a predetermined position on the outer peripheral portion of the mask 400e, and the marker 613 is formed at a position facing the marker 612 on the outer peripheral portion of the mask 400e. A straight line connecting the marker 612 and the marker 613 passes through the center point of the mask 400e. For example, the marker 612 and the marker 613 are numbers "2". Note that the markers 611, 612, and 613 are not limited to a number, and may be a bar code, a two-dimensional code, color information, or the like, and may be any information that can identify each marker. Further, the markers 611, 612, and 613 may be printed on the masks 400d and 400e, or may be attached with a seal or the like.

The multi-pinhole mask 301a illustrated in FIG. 55 is configured by overlaying the mask 400d illustrated in FIG. 53 and the mask 400e illustrated in FIG. 54.

The marker position specifying unit 112 specifies the positions of the markers 611, 612, and 613 from the image obtained by imaging the multi-pinhole mask 301a. For example, the marker position specifying unit 112 specifies the coordinate positions of the markers 611, 612, and 613 in the image.

The mask identification unit 105 detects the rotation angle of the mask 400d with respect to the mask 400e based on the positions of the markers 611, 612, and 613 specified by the marker position specifying unit 112, and identifies the mask pattern of the mask based on the detected rotation angle.

The mask identification unit 105 stores mask information corresponding to the rotation angle of the mask 400d with respect to the mask 400e in advance. The mask information corresponding to the rotation angle is, for example, information about the PSF that changes in accordance with the rotation angle of the mask 400d with respect to the mask 400e. As the mask 400d rotates with respect to the mask 400e, the positions and the number of the plurality of pinholes formed in the multi-pinhole mask 301a change.

In a case where the second camera 121 images the multi-pinhole mask 301a where the two masks 400d and 400e are overlaid, as illustrated in FIG. 55, the markers 611, 612, and 613 on the outer peripheral portion of the multi-pinhole mask 301a are imaged. The marker position specifying unit 112 specifies the positions of the markers 611, 612, and 613 from the image obtained by imaging the multi-pinhole mask 301a. The mask identification unit 105 calculates a line segment 621 connecting the markers 612 and 613, and a midpoint 614 of the line segment 621 from the position information about the specified markers 611, 612, and 613. Further, the mask identification unit 105 calculates an angle θ between a line segment 622 connecting the calculated midpoint 614 and the marker 611 and the line segment 621 connecting the markers 612 and 613 as a rotation angle of the mask 400d with respect to the mask 400e.

The mask identification unit 105 acquires mask information corresponding to the rotation angle of the mask 400d with respect to the mask 400e from the memory. The mask information corresponding to the rotation angle of the mask 400d with respect to the mask 400e is a PSF corresponding to the mask pattern in accordance with the rotation angle.

The identification model change unit 106 changes the identification model in accordance with the mask pattern (mask information) identified by the mask identification unit 105.

In this way, since the image identification unit 103 can identify the computational image using the identification model optimal for the mask pattern of the multi-pinhole mask 301a that is the first camera 101, high identification accuracy can be maintained even if the mask is changed.

(Fourth embodiment)

In the first to third embodiments, the storage unit 102 stores a plurality of mask patterns and a plurality of identification models in advance in association with each other, and the identification model change unit 106 selects an identification model associated with the mask pattern identified by the mask identification unit 105 from the plurality of identification models stored in the storage unit 102.

On the other hand, the image identification system according to the fourth embodiment may further include a learning device. The learning device may learn the identification model in accordance with the mask pattern identified by the mask identification unit 105.

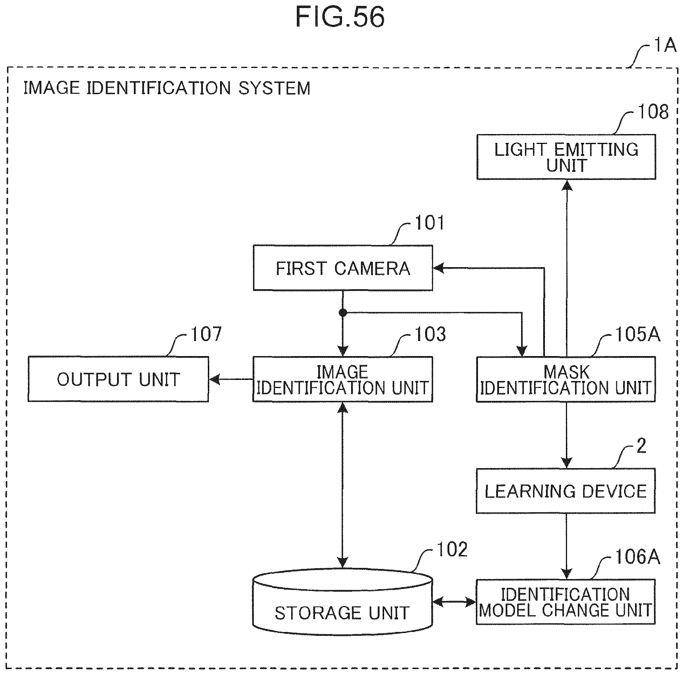

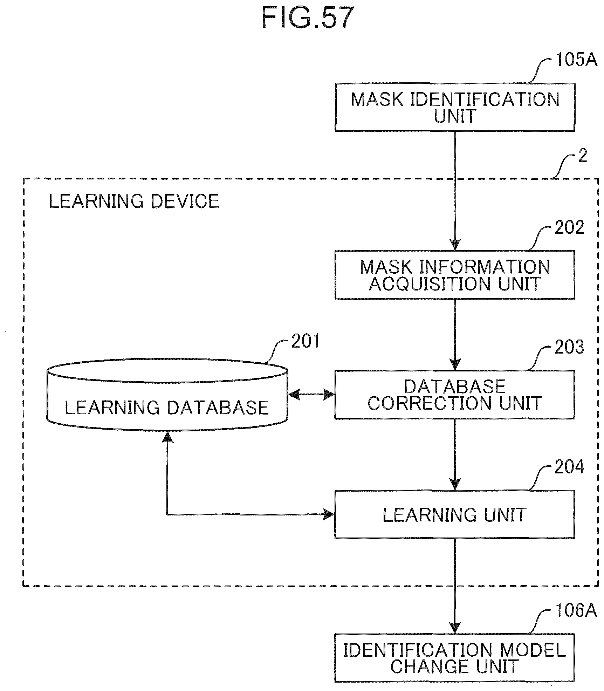

FIG. 56 is a block diagram illustrating one example of a configuration of an image identification system 1A according to the fourth embodiment of the present disclosure, and FIG. 57 is a block diagram illustrating one example of a configuration of a learning device 2 according to the fourth embodiment of the present disclosure. Note that, in the image identification system 1A illustrated in FIG. 56, the same components as those of the image identification system 1 illustrated in FIG. 1 are denoted by the same reference numerals, and description thereof is omitted.

The image identification system 1A of the fourth embodiment includes a first camera 101, a storage unit 102, an image identification unit 103, a mask identification unit 105A, an identification model change unit 106A, an output unit 107, a light emitting unit 108, and the learning device 2. The mask identification unit 105A, the identification model change unit 106A, and the image identification unit 103 include a processor such as a CPU and a memory such as a semiconductor memory.

The image identification system 1A may include, for example, an image identification device including the storage unit 102, the image identification unit 103, the mask identification unit 105A, and the identification model change unit 106A, and may be configured so that the first camera 101, the output unit 107, the light emitting unit 108, and the learning device 2 are connected to the image identification device. In addition, the image identification device and the learning device 2 may be a server. Further, the image identification system 1A may include, for example, an image identification device including the first camera 101, the storage unit 102, the image identification unit 103, the mask identification unit 105, the identification model change unit 106, and the output unit 107, and may be configured so that the light emitting unit 108 and the learning device 2 are connected to the image identification device. In addition, the image identification device may include the learning device 2.

The learning device 2 acquires a first learning image captured by a camera (second camera) that captures an image with no blurring or an image with a blurring less than of an image captured by the first camera 101 and a correct answer label given to the first learning image. The learning device 2 generates a blurred second learning image based on the mask pattern identified by the mask identification unit 105A and the first learning image. The learning device 2 creates an identification model for identifying a computational image captured by the first camera 101 by performing machine learning using the second learning image and the correct answer label.

The identification model change unit 106A changes the current identification model to the identification model created by the learning device 2.

The learning device 2 includes a learning database 201, a mask information acquisition unit 202, a database correction unit 203, and a learning unit 204. The learning device 2 trains the identification model to be used for identification of the image identification unit 103 by using the mask information identified by the mask identification unit 105. As described above, a PSF may be used as the mask information. The learning database 201 is a storage unit such as an HDD, an SSD, or a semiconductor memory.

The mask information acquisition unit 202, the database correction unit 203, and the learning unit 204 include a processor such as a CPU as hardware. In addition, in a case where the mask information acquisition unit 202 transmits and receives information to and from the mask identification unit 105A via a wired or wireless network, the mask information acquisition unit 202 includes a reception unit. The reception unit includes a reception circuit as hardware. On the other hand, the mask identification unit 105A includes a transmission circuit and a processor such as a CPU as hardware.

Further, in a case where the learning unit 204 transmits and receives information to and from the identification model change unit 106A via the network, the learning unit 204 includes a transmission unit. The transmission unit includes a transmission circuit as hardware. The identification model change unit 106A includes a reception circuit and a processor such as a CPU as hardware.

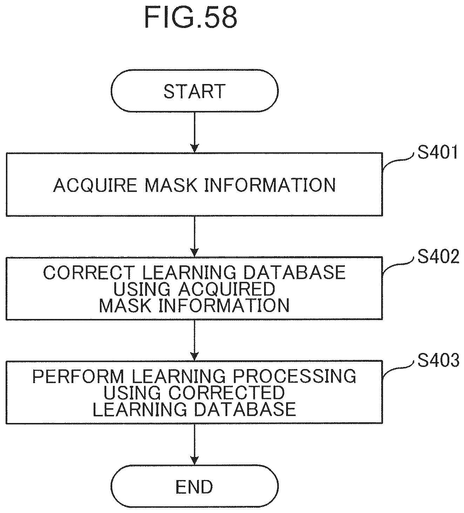

FIG. 58 is a flowchart illustrating one example of a procedure of main processing of the learning device 2 according to the fourth embodiment of the present disclosure.

First, the mask information acquisition unit 202 acquires the mask information identified by the mask identification unit 105A from the mask identification unit 105A (step S401). In a case where the mask identification unit 105A includes a transmission unit and the mask information acquisition unit 202 includes a reception unit, the mask information may be transmitted and received in a wired or wireless manner. In a case where the mask information acquisition unit 202 includes an interface, the mask information may be given by a user.

Subsequently, the database correction unit 203 corrects the learning database 201 using the mask information acquired by the mask information acquisition unit 202 (step S402). For example, when the image identification unit 103 identifies a behavior of a person in an environment, the learning database 201 holds an image without blurring captured by a normal camera, and annotation information (correct answer label) that is given to each image and that indicates a position at which the person has performed what kind of behavior in the image. When a normal camera is used, annotation information may be assigned to an image captured by the camera. However, when a computational image is acquired by a multi-pinhole camera or a light-field camera, it is difficult to assign annotation information to the image because a person cannot find what the image shows even when looking at the image. Additionally, even when learning processing is performed on an image captured by a normal camera significantly different from the first camera 101, the image identification unit 103 does not increase in identification accuracy.

Therefore, a database in which annotation information is added in advance to an image captured by a normal camera is held as the learning database 201. The database correction unit 203 uses the mask information acquired from the mask identification unit 105A to transform an image captured by a normal camera into an image to be captured by the first camera 101, thereby creating a learning data set corresponding to the mask pattern of the first camera 101 and correcting the learning database 201. The identification model is created by performing the learning processing using the created learning data set. Then, the image identification unit 103 performs identification using the created identification model, thereby improving identification accuracy. Therefore, the database correction unit 203 calculates, from a captured image z that is obtained from the normal camera and is prepared in advance in the learning database 201, a corrected image y based on the following formula (2) using a PSF that is mask information acquired by the mask information acquisition unit 202.

$$y = k*z \dots (2)$$

In the formula (2), k represents the PSF that is the mask information acquired by the mask information acquisition unit 202, and * represents a convolution operator.

The database correction unit 203 stores the corrected image and the annotation information in the learning database 201.

Next, the learning unit 204 performs the learning processing using the corrected learning database 201 (step S403). The learning unit 204 performs the learning processing by using the corrected image calculated by the database correction unit 203 and the annotation information held in advance in the learning database 201, and creates a trained identification model. For example, in a case where the identification model is constructed by a multilayer neural network, the learning unit 204 performs machine learning with Deep Learning using, as teacher data, the corrected image and the annotation information added to the image captured by the normal camera used when the corrected image is calculated. As a prediction error correction algorithm, a back propagation method or the like may be used.

The trained identification model created by the learning unit 204 is output to the identification model change unit 106A. The identification model change unit 106A stores the received trained identification model in the storage unit 102. For example, the identification model change unit 106A replaces the identification model stored in the storage unit 102 with the received trained identification model, and stores the replaced trained identification model as a new identification model in the storage unit 102. In this way, the identification model change unit 106A changes the identification model in accordance with the mask pattern identified by the mask identification unit 105A.

The image identification unit 103 reads the new identification model from the storage unit 102, and identifies the computational image captured by the first camera 101 using the read new identification model.

Note that, in the fourth embodiment, a configuration where the learning device 2 is independent from the identification model change unit 106A has been described, but the present disclosure is not limited thereto. The identification model change unit 106A may include the learning device 2.

The corrected image is an image that matches the PSF corresponding to the mask pattern of the mask of the first camera 101. Therefore, in the learning using the corrected image, a new identification model more suitable for the mask pattern of the mask of the first camera 101 is created by the learning processing of the learning device 2. That is, even if the mask pattern of the mask of the first camera 101 is changed, the new identification model more suitable for the changed mask pattern of the mask is created by the learning processing of the learning device 2. Therefore, even if the mask pattern of the mask of the first camera 101 is changed, the image identification unit 103 performs the identification processing using the created new identification model, thus implementing the highly accurate identification processing.

As described above, the image identification system 1A of the fourth embodiment can improve the identification accuracy by training the identification model in accordance with the mask pattern of the mask of the first camera 101. The image identification system 1A of the fourth embodiment is particularly effective for sensing in an environment where privacy needs to be considered. This is because the first camera 101 is different from a normal camera, and it is difficult for a person to recognize a subject even if the person sees the captured image itself.

Note that in each of the above embodiments, each constituent may include dedicated hardware or may be implemented by execution of a software program suitable for each constituent. Each constituent may be implemented by a program execution unit, such as a CPU or a processor, reading and executing a software program recorded in a recording medium such as a hard disk or a semiconductor memory.

Some or all functions of the devices according to the embodiments of the present disclosure are implemented as large scale integration (LSI), which is typically an integrated circuit. These functions may be individually integrated into one chip, or may be integrated into one chip so as to include some or all functions. Circuit integration is not limited to LSI, and may be implemented by a dedicated circuit or a general-purpose processor. A field programmable gate array (FPGA), which can be programmed after manufacturing of LSI, or a reconfigurable processor in which connection and setting of circuit cells inside LSI can be reconfigured may be used.

Some or all functions of the devices according to the embodiments of the present disclosure may be implemented by a processor such as a CPU executing a program.

The numerical figures used above are all illustrated to specifically describe the present disclosure, and the present disclosure is not limited to the illustrated numerical figures.

The order in which each step shown in the above flowcharts is executed is for specifically describing the present disclosure, and may be any order other than the above order as long as a similar effect is obtained. Some of the above steps may be executed simultaneously (in parallel) with other steps.

**Industrial Applicability**

Since the technique according to the present disclosure can reduce the psychological load on a user while protecting the privacy of a subject, the technique according to the present disclosure is useful as a technology for identifying an image in an environment requiring privacy protection, in particular, in the home or indoors.

**Claims**

1. An image identification system comprising:

   a first camera that includes a mask and an image sensor, the mask having a changeable mask pattern having a plurality of pinholes, and captures a computational image that is an image with blurring;
   an image identification unit that identifies the computational image using an identification model that uses the computational image captured by the first camera as input data and an identification result as output data;
   a mask identification unit that, after the mask pattern is changed, identifies the mask pattern that has been changed; and
   an identification model change unit that changes the identification model in accordance with the mask pattern identified by the mask identification unit.

2. The image identification system according to claim 1, further comprising a mask change unit that changes the mask pattern of the mask.

3. The image identification system according to claim 1 or 2, wherein

   the first camera includes a multi-pinhole camera,
   the mask includes a multi-pinhole mask in which a plurality of masks are overlaid,
   the plurality of masks respectively have mask patterns different from each other, and
   the mask pattern of the multi-pinhole mask is changed when at least one of the plurality of masks is removed.

4. The image identification system according to claim 1 or 2, wherein

   the first camera includes a multi-pinhole camera,
   the mask includes a multi-pinhole mask in which a plurality of masks are overlaid,
   the plurality of masks respectively have mask patterns different from each other, and
   at least one of the plurality of pinholes formed in one of the plurality of masks is shielded by another one of the plurality of masks.

5. The image identification system according to claim 1 or 2, wherein

   the first camera includes a multi-pinhole camera,
   the mask includes a multi-pinhole mask in which a plurality of masks are overlaid,
   the plurality of masks respectively have mask patterns different from each other, and
   at least one of the plurality of pinholes formed in one of the plurality of masks is disposed on a position identical to a position of at least one of the plurality of pinholes formed in another one of the plurality of masks.

6. The image identification system according to claim 5, wherein the one pinhole included in the one mask has a size different from a size of the other pinhole included in the other mask at the position identical to the position of the one pinhole.

7. The image identification system according to claim 1 or 2, wherein the mask identification unit acquires mask information about the mask pattern from the computational image captured by the first camera, and identifies the mask pattern of the mask based on the acquired mask information.

8. The image identification system according to claim 7 further comprising a light emitting unit, wherein the mask identification unit acquires a point spread function as the mask information from an image including the light emitting unit, the image being captured by the first camera.

9. The image identification system according to claim 1 or 2, further comprising a mask identification information acquisition unit that acquires mask identification information for identifying the mask, wherein the mask identification unit identifies the mask pattern of the mask based on the acquired mask identification information.

10. The image identification system according to claim 1 or 2, wherein

    the mask includes a first mask and a second mask overlaid on the first mask,
    the system further comprises a marker position specifying unit that specifies positions of a plurality of markers formed on each of the first mask and the second mask to detect a rotation angle of the first mask with respect to the second mask, and
    the mask identification unit detects the rotation angle of the first mask with respect to the second mask based on the specified positions of the plurality of markers and identifies the mask pattern of the mask based on the detected rotation angle.

**11.** The image identification system according to claim 1 or 2 further comprising a storage unit that stores a plurality of mask patterns and a plurality of identification models in association with each other, wherein the identification model change unit specifies an identification model associated with the mask pattern identified by the mask identification unit from among the plurality of identification models stored in the storage unit, and changes the current identification model to the specified identification model.

**12.** The image identification system according to claim 1 or 2, further comprising a learning unit that acquires a first learning image captured by a second camera that captures an image without blurring or an image with blurring less than blurring by the first camera and a correct answer label given to the first learning image, generates a second learning image with blurring based on the mask pattern identified by the mask identification unit and the first learning image, and performs machine learning using the second learning image and the correct answer label to create an identification model for identifying the computational image captured by the first camera, wherein the identification model change unit changes the current identification model to the identification model created by the learning unit.

**13.** An image identification method in an image identification system, the method comprising:

acquiring a computational image that is an image with blurring captured by a first camera that includes a mask and an image sensor, the mask having a changeable mask pattern having a plurality of pinholes;
identifying the computational image using an identification model that uses the computational image captured by the first camera as input data and an identification result as output data;
after the mask pattern is changed, identifying the mask pattern that has been changed; and changing the identification model in accordance with the identified mask pattern.

**14.** An image identification program causing a computer to perform operations, the operations comprising:

acquiring a computational image that is an image with blurring captured by a first camera that includes a mask and an image sensor, the mask having a changeable mask pattern having a plurality of pinholes;
identifying the computational image using an identification model that uses the computational image captured by the first camera as input data and an identification result as output data;
after the mask pattern is changed, identifying the mask pattern that has been changed; and changing the identification model in accordance with the identified mask pattern.

**15.** A computer-readable non-temporary recording medium including an image identification program recorded therein, the image identification program causing a computer to perform operations comprising:

acquiring a computational image that is an image with blurring captured by a first camera that includes a mask and an image sensor, the mask having a changeable mask pattern having a plurality of pinholes;
identifying the computational image using an identification model that uses the computational image captured by the first camera as input data and an identification result as output data;
after the mask pattern is changed, identifying the mask pattern that has been changed; and changing the identification model in accordance with the identified mask pattern.

# FIG.1

IMAGE IDENTIFICATION SYSTEM

# FIG.2

```
        ┌─────────────┐
        │    START    │
        └──────┬──────┘
               │
               ▼
   ┌───────────────────────────────┐     S101
   │  CAPTURE COMPUTATIONAL IMAGE   │
   └───────────────┬───────────────┘
                   │
                   ▼
   ┌───────────────────────────────┐     S102
   │ PERFORM IDENTIFICATION PROCESSING │
   └───────────────┬───────────────┘
                   │
                   ▼
   ┌───────────────────────────────┐     S103
   │  OUTPUT IDENTIFICATION RESULT  │
   └───────────────┬───────────────┘
                   │
                   ▼
        ┌─────────────┐
        │     END     │
        └─────────────┘
```

# FIG.3

SUBJECT IMAGE

301    301a    301b

301aa

# FIG.4

```
        ┌─────────────────┐
        │      START      │
        └─────────────────┘
                 │
                 ▼
┌───────────────────────────────────────┐   S202
│   IDENTIFY CHANGED MASK PATTERN        │
└───────────────────────────────────────┘
                 │
                 ▼
┌───────────────────────────────────────┐   S203
│   CHANGE IDENTIFICATION MODEL          │
│           IN ACCORDANCE                 │
│   WITH IDENTIFIED MASK PATTERN         │
└───────────────────────────────────────┘
                 │
                 ▼
        ┌─────────────────┐
        │       END       │
        └─────────────────┘
```

EP 4 436 199 A1

# FIG.5

# FIG.6

31

# FIG.7

# FIG.8

# FIG.9

418

417

400e

# FIG.10

414    415

411

418

416

417

412

400d

413

301a

# FIG.11

301a

# FIG.12

301a

## FIG.13

## FIG.14

# FIG.15

502

301

400d

501

# FIG.16

301

502

400d

501

# FIG.17

513

301

511

512

# FIG.18

513    301a

301

301b

400d

400e

511    512

## FIG.19

## FIG.20

FIG.21

301

301ab

301b

501

# FIG.22

IMAGE IDENTIFICATION SYSTEM
                                                              1B

                                                    ┌─── 109
                                          ┌─────────────────────┐
                                          │     INPUT UNIT      │
                                          └─────────────────────┘
                                                      │
                      ┌─── 101                        ▼        ┌─── 104
           ┌─────────────────────┐          ┌─────────────────────┐
           │    FIRST CAMERA     │◄─────────│  MASK CHANGE UNIT   │
           └─────────────────────┘          └─────────────────────┘
                      │                                │
   ┌─── 107           │        ┌─── 103                ▼        ┌─── 105
┌──────────────┐      ▼   ┌─────────────────┐  ┌─────────────────────┐
│ OUTPUT UNIT  │◄────────│     IMAGE        │  │        MASK         │
└──────────────┘         │ IDENTIFICATION   │  │  IDENTIFICATION UNIT │
                         │     UNIT         │  └─────────────────────┘
                         └─────────────────┘             │
                              ▲      ┌─── 102             ▼        ┌─── 106
                              │  ╭─────────────╮  ┌─────────────────────┐
                              ▼  │             │  │   IDENTIFICATION    │
                                 │ STORAGE UNIT│◄►│ MODEL CHANGE UNIT   │
                                 ╰─────────────╯  └─────────────────────┘

# FIG.23

```
        START
          │
          ▼
┌─────────────────────────────┐   S201
│    CHANGE MASK PATTERN       │
└─────────────────────────────┘
          │
          ▼
┌─────────────────────────────┐   S202
│ IDENTIFY CHANGED MASK PATTERN│
└─────────────────────────────┘
          │
          ▼
┌─────────────────────────────┐   S203
│  CHANGE IDENTIFICATION MODEL │
│       IN ACCORDANCE          │
│ WITH IDENTIFIED MASK PATTERN │
└─────────────────────────────┘
          │
          ▼
         END
```

## FIG.24

301

520

301b

501

## FIG.25

301

301ac

301b

501

# FIG.26

301a1

301aa1

301aa2

# FIG.27

301a2

301aa3

# FIG.28

301a3

301aa4    301aa5

# FIG.29

301ac

301aa1

301aa3

301aa2

301aa4    301aa5

## FIG.30

301ac

301aa1

301aa2

301aa3

301aa4

301aa5

## FIG.31

301ac

301aa1

301aa3

301aa4

301aa5

# FIG.32

521

522

523        301ad        524

## FIG.33

521

522

523

301ad

524

FIG.34

521

522

523    301ad    524

# FIG.35

START

↓

INSTRUCT LIGHT EMITTING UNIT
TO LIGHT UP — S301

↓

PERFORM LIGHTING UP — S302

↓

INSTRUCT FIRST CAMERA
TO PERFORM IMAGING — S303

↓

CAPTURE COMPUTATIONAL IMAGE
DURING LIGHTING UP — S304

↓

INSTRUCT LIGHT EMITTING UNIT
TO LIGHT OUT — S305

↓

PERFORM LIGHTING OUT — S306

↓

INSTRUCT FIRST CAMERA
TO PERFORM IMAGING — S307

↓

CAPTURE COMPUTATIONAL IMAGE
DURING LIGHTING-OUT — S308

↓

CALCULATE DIFFERENCE IMAGE — S309

↓

END

## FIG.36

701

108

## FIG.37

702

# FIG.38

703

# FIG.39

START

CALCULATE PLURALITY OF PSFs — S331

INTERPOLATE CALCULATED
PLURALITY OF PSFs TO ACQUIRE LTM — S332

END

# FIG.40

# FIG.41

START

INSTRUCT LIGHT EMITTING UNIT
TO LIGHT UP ⟩S301

PERFORM LIGHTING UP ⟩S302

INSTRUCT FIRST CAMERA
TO PERFORM IMAGING ⟩S303

CAPTURE COMPUTATIONAL IMAGE
DURING LIGHTING UP ⟩S304

INSTRUCT LIGHT EMITTING UNIT
TO LIGHT OUT ⟩S305

PERFORM LIGHTING OUT ⟩S306

INSTRUCT FIRST CAMERA
TO PERFORM IMAGING ⟩S307

CAPTURE COMPUTATIONAL IMAGE
DURING LIGHTING OUT ⟩S308

CALCULATE DIFFERENCE IMAGE ⟩S309

IS IMAGE QUALITY
OF DIFFERENCE IMAGE
SUFFICIENT? ⟩S310          NO

YES

SAVE CALCULATED
DIFFERENCE IMAGE AS PSF ⟩S311

END

# FIG.42

STEP S303

CAPTURE COMPUTATIONAL IMAGE DURING LIGHTING UP — S304

ACQUIRE COMPUTATIONAL IMAGE DURING LIGHTING-UP OF LIGHT EMITTING UNIT — S321

MAXIMUM LUMINANCE VALUE IS EQUAL TO OR GREATER THAN UPPER LIMIT VALUE Th1 ? — S322

YES → INSTRUCT FIRST CAMERA TO AGAIN PERFORM IMAGING WITH SHORTER EXPOSURE TIME — S323

NO

MAXIMUM LUMINANCE VALUE IS EQUAL TO OR SMALLER THAN LOWER LIMIT VALUE Th2 ? — S324

YES → INSTRUCT FIRST CAMERA TO AGAIN PERFORM IMAGING WITH LONGER EXPOSURE TIME — S325

NO

STEP S305

# FIG.43

STEP S303

CAPTURE COMPUTATIONAL IMAGE DURING LIGHTING UP — S304

ACQUIRE COMPUTATIONAL IMAGE DURING LIGHTING-UP OF LIGHT EMITTING UNIT — S321

MAXIMUM LUMINANCE VALUE IS EQUAL TO OR GREATER THAN UPPER LIMIT VALUE Th1 ? — S322

YES → INSTRUCT FIRST CAMERA TO AGAIN PERFORM IMAGING WITH SMALLER GAIN — S327

NO

MAXIMUM LUMINANCE VALUE IS EQUAL TO OR SMALLER THAN LOWER LIMIT VALUE Th2 ? — S324

YES → INSTRUCT FIRST CAMERA TO AGAIN PERFORM IMAGING WITH GREATER GAIN — S328

NO

STEP S305

FIG.44

IMAGE IDENTIFICATION SYSTEM

1C

121 SECOND CAMERA

111 ID INFORMATION ACQUISITION UNIT

101 FIRST CAMERA

107 OUTPUT UNIT

103 IMAGE IDENTIFICATION UNIT

105 MASK IDENTIFICATION UNIT

102 STORAGE UNIT

106 IDENTIFICATION MODEL CHANGE UNIT

FIG.45

601

400a

## FIG.46

602

400b

## FIG.47

603

400c

# FIG.48

301a

# FIG.49

301a

## FIG.50

## FIG.51

# FIG.52

## FIG.53

611

400d

FIG.54

## FIG.55

301a

# FIG.56

IMAGE IDENTIFICATION SYSTEM — 1A

LIGHT EMITTING UNIT — 108

FIRST CAMERA — 101

OUTPUT UNIT — 107

IMAGE IDENTIFICATION UNIT — 103

MASK IDENTIFICATION UNIT — 105A

LEARNING DEVICE — 2

STORAGE UNIT — 102

IDENTIFICATION MODEL CHANGE UNIT — 106A

# FIG.57

MASK IDENTIFICATION UNIT — 105A

LEARNING DEVICE — 2

MASK INFORMATION ACQUISITION UNIT — 202

LEARNING DATABASE — 201

DATABASE CORRECTION UNIT — 203

LEARNING UNIT — 204

IDENTIFICATION MODEL CHANGE UNIT — 106A

# FIG.58

```
        ┌─────────────┐
        │    START    │
        └──────┬──────┘
               │
               ▼
   ┌───────────────────────────┐   S401
   │  ACQUIRE MASK INFORMATION │
   └─────────────┬─────────────┘
                 │
                 ▼
   ┌───────────────────────────┐   S402
   │  CORRECT LEARNING DATABASE│
   │      USING ACQUIRED       │
   │      MASK INFORMATION     │
   └─────────────┬─────────────┘
                 │
                 ▼
   ┌───────────────────────────┐   S403
   │ PERFORM LEARNING PROCESSING│
   │      USING CORRECTED      │
   │      LEARNING DATABASE    │
   └─────────────┬─────────────┘
                 │
                 ▼
        ┌─────────────┐
        │     END     │
        └─────────────┘
```

## INTERNATIONAL SEARCH REPORT

| International application No. |
| --- |
| **PCT/JP2022/046813** |

| **A.** | **CLASSIFICATION OF SUBJECT MATTER** |
| --- | --- |

*H04N 23/955*(2023.01)i; *G03B 15/00*(2021.01)i; *G03B 19/16*(2021.01)i; *G06T 7/00*(2017.01)i; *H04N 23/55*(2023.01)i; *H04N 23/60*(2023.01)i
FI:  H04N23/955; G03B15/00 U; H04N23/55; H04N23/60 500; G03B19/16; G06T7/00 350B

According to International Patent Classification (IPC) or to both national classification and IPC

| **B.** | **FIELDS SEARCHED** |
| --- | --- |

Minimum documentation searched (classification system followed by classification symbols)

H04N23/955; G03B15/00; G03B19/16; G06T7/00; H04N23/55; H04N23/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | WO 2021/075527 A1 (OSAKA UNIV.) 22 April 2021 (2021-04-22) paragraphs [0001], [0012]-[0088], fig. 1-14 | 1-2, 9, 11, 13-15 |
| A | paragraphs [0001], [0012]-[0088], fig. 1-14 | 3-8, 10, 12 |
| A | WO 2019/078337 A1 (SONY CORP.) 25 April 2019 (2019-04-25) paragraphs [0031]-[0513], fig. 1-62 | 1-15 |
| A | WO 2021/176899 A1 (PANASONIC INTELLECTUAL PROPERTY CORP. OF AMERICA) 10 September 2021 (2021-09-10) paragraphs [0013]-[0159], fig. 1-10 | 1-15 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 February 2023** | **07 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/046813**

| Patent document cited in search report | | | Publication date (day/month/year) | Patent family member(s) | | | Publication date (day/month/year) |
|---|---|---|---|---|---|---|---|
| WO | 2021/075527 | A1 | 22 April 2021 | (Family: none) | | | |
| WO | 2019/078337 | A1 | 25 April 2019 | US | 2020/0358926 | A1 | |
| | | | | paragraphs [0104]-[0685], fig. 1-62 | | | |
| | | | | EP | 3700186 | A1 | |
| | | | | CN | 111201776 | A | |
| | | | | KR | 10-2020-0074101 | A | |
| WO | 2021/176899 | A1 | 10 September 2021 | CN | 115191004 | A | |
| | | | | paragraphs [0026]-[0183], fig. 1-10 | | | |

Form PCT/ISA/210 (patent family annex) (January 2015)

**REFERENCES CITED IN THE DESCRIPTION**

**Patent documents cited in the description**

- WO 2019054092 A

**Non-patent literature cited in the description**

- **M. SALMAN ASIF ; ALI AYREMLOU ; ASHOK VEERARAGHAVAN ; RICHARD BARANIUK ; AS-WIN SANKARANARAYANAN.** FlatCam: Replacing Lenses with Masks and Computation. *International Conference on Computer Vision Workshop (IC-CVW),* 2015, 663-666